# EUROPEAN PATENT APPLICATION

(11) **EP 4 592 911 A1**
(43) Date of publication of application: **30.07.2025**
(21) Application number: 22959596.2
(22) Date of filing: 22.09.2022
(51) Int. Cl.: G06N 20/00

(54) **CONTROL DEVICE, CONSTRAINT CONDITION SELECTION DEVICE, DATA GENERATION DEVICE, CONTROL METHOD, CONSTRAINT CONDITION SELECTION METHOD, DATA GENERATION METHOD, AND STORAGE MEDIUM**

(71) Applicant: NEC Corporation, 108-8001 Tokyo (JP)
(72) Inventor: OYAMA Hiroyuki, Tokyo 108-8001 (JP); KAMI Nobuharu, Tokyo 108-8001 (JP); OGAWA Masatsugu, Tokyo 108-8001 (JP); WAKAYAMA Hisaya, Tokyo 108-8001 (JP); ICHIEN Masumi, Tokyo 108-8001 (JP); TAKANO Rin, Tokyo 108-8001 (JP); TAYA Yuki, Tokyo 108-8001 (JP)
(74) Representative: Betten & Resch
(86) International application number: PCT/JP2022/035529
(87) International publication number: WO 2024/062632

(57) **Abstract**

A control device includes: a constraint condition selection means for selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution; and a control execution means for controlling a control target to execute the processing subjected to execution based on a constraint condition indicated by the selected environment-compliant constraint condition data.

## Description

### TECHNICAL FIELD

The present invention relates to a control device, a constraint condition selection device, a data generation device, a control method, a constraint condition selection method, a data generation method, and a storage medium.

### BACKGROUND ART

A technique for acquiring control commands for a robot according to an operating environment of the robot, and then controlling the robot has been proposed.

For example, a trained model generation device described in Patent Document 1 generates a training data set, in which feature amounts extracted by an auto encoder from sensor data related to an operating environment of a robot, and the motions to be performed by the robot, are associated with each other. Then, the trained model generation device refers to the obtained training data set, and generates a trained model that defines the relationship between the operating environment and the motions to be performed by the robot. Moreover, a robot control device generates commands that are compliant with the operating environment by inputting the feature amounts extracted from the sensor data related to the operating environment of the robot subjected to control, into the trained model. The robot control device causes the robot subjected to control to perform the motions by transmitting the generated commands to the robot subjected to control.

### Prior Art Documents

### Patent Documents

Patent Document 1: Japanese Unexamined Patent Application, First Publication No. 2020-113262

### SUMMARY OF INVENTION

### Problem to be Solved by the Invention

In cases where different processing is to be performed by a control target, such as a robot, it is preferable for each processing to be able to be performed by the control target.

An example object of the present disclosure is to provide a control device, a constraint condition selection device, a data generation device, a control method, a constraint condition selection method, a data generation method, and a storage medium that are capable of solving the above problem.

### Solution to Problem

According to a first example aspect of the present invention, a control device includes: a constraint condition selection means for selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution; and a control execution means for controlling a control target to execute the processing subjected to execution based on a constraint condition indicated by the selected environment-compliant constraint condition data.

According to a second example aspect of the present invention, a constraint condition selection device includes: a constraint condition selection means for selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution.

According to a third example aspect of the present invention, a data generation device includes: a constraint condition learning means for learning a constraint condition based on a simulation result of processing; and an environment-compliant constraint condition data generation means for generating, by associating information related to an environment of a simulation of the processing and the constraint condition obtained by learning with each other, environment-compliant constraint condition data in which environment feature information that is information related to an environment, and a constraint condition are associated with each other.

According to a fourth example aspect of the present invention, a control method is executed by a computer, and includes: selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution; and controlling a control target to execute the processing subjected to execution based on a constraint condition indicated by the selected environment-compliant constraint condition data.

According to a fifth example aspect of the present invention, a constraint condition selection method is executed by a computer, and includes: selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution.

According to a sixth example aspect of the present invention, a data generation method is executed by a computer, and includes: learning a constraint condition based on a simulation result of processing; and generating, by associating information related to an environment of a simulation of the processing and the constraint condition obtained by learning with each other, environment-compliant constraint condition data in which environment feature information that is information related to an environment, and a constraint condition are associated with each other.

According to seventh example aspect of the present invention, a recording medium stores a program that causes a computer to execute: selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution; and controlling a control target to execute the processing subjected to execution based on a constraint condition indicated by the selected environment-compliant constraint condition data.

According to an eighth example aspect of the present invention, a recording medium stores a program that causes a computer to execute: selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution.

According to a ninth example aspect of the present invention, a recording medium that stores a program that causes a computer to execute: learning a constraint condition based on a simulation result of processing; and generating, by associating information related to an environment of a simulation of the processing and the constraint condition obtained by learning with each other, environment-compliant constraint condition data in which environment feature information that is information related to an environment, and a constraint condition are associated with each other.

### Effect of Invention

According to the present invention, in cases where different processing is to be performed by a control target, such as a robot, it is expected to be possible for each processing to be performed by the control target.

### BRIEF DESCRIPTION OF THE DRAWINGS

[FIG. 1] FIG. 1 is a diagram showing an example of a configuration of a control system according to a first example embodiment.
[FIG. 2] FIG. 2 is a diagram showing an example of a configuration of a control device according to the first example embodiment.
[FIG. 3] FIG. 3 is a diagram showing an example of a capture image of a real environment in the first example embodiment.
[FIG. 4] FIG. 4 is a diagram showing a first example of an environment graph in the first example embodiment.
[FIG. 5] FIG. 5 is a diagram showing a second example of an environment graph in the first example embodiment.
[FIG. 6] FIG. 6 is a diagram showing a third example of an environment graph in the first example embodiment.
[FIG. 7] FIG. 7 is a diagram showing a fourth example of an environment graph in the first example embodiment.
[FIG. 8] FIG. 8 is a diagram showing an example of a data flow in a case where the control device according to the first example embodiment controls a control target.
[FIG. 9] FIG. 9 is a diagram showing an example of a processing procedure by which the control device according to the first example embodiment controls a control target.
[FIG. 10] FIG. 10 is a diagram showing an example of a configuration of a control device according to a second example embodiment.
[FIG. 11] FIG. 11 is a diagram showing an example of a data flow in a case where the control device according to the second example embodiment newly generates environment-compliant constraint condition data.
[FIG. 12] FIG. 12 is a diagram showing an example of a processing procedure by which the control device according to the second example embodiment controls a control target.
[FIG. 13] FIG. 13 is a diagram showing an example of a configuration of a control device according to a third example embodiment.
[FIG. 14] FIG. 14 is a diagram showing an example of a data flow in a case where the control device according to the third example embodiment newly generates environment-compliant constraint condition data.
[FIG. 15] FIG. 15 is a diagram showing an example of a processing procedure by which the control device according to the third example embodiment controls a control target.
[FIG. 16] FIG. 16 is a diagram showing an example of a configuration of a control device according to a fourth example embodiment.
[FIG. 17] FIG. 17 is a diagram showing an example of a data flow in a case where the control device according to the fourth example embodiment newly generates environment-compliant constraint condition data.
[FIG. 18] FIG. 18 is a diagram showing an example of a processing procedure by which the control device according to the fourth example embodiment controls a control target.
[FIG. 19] FIG. 19 is a diagram showing an example of processing performed by a control target in the fourth example embodiment according to a control by the control device.
[FIG. 20] FIG. 20 is a diagram showing an example of a configuration of a control device according to a fifth example embodiment.
[FIG. 21] FIG. 21 is a diagram showing an example of a configuration of a constraint condition selection device according to a sixth example embodiment.
[FIG. 22] FIG. 22 is a diagram showing an example of a configuration of a data generation device according to a seventh example embodiment.
[FIG. 23] FIG. 23 is a diagram showing an example of the processing procedure of a control method according to an eighth example embodiment.
[FIG. 24] FIG. 24 is a diagram showing an example of the processing procedure of a constraint condition selection method according to a ninth example embodiment.
[FIG. 25] FIG. 25 is a diagram showing an example of the processing procedure of a data generation method according to a tenth example embodiment.
[FIG. 26] FIG. 26 is a schematic block diagram showing a configuration of a computer according to at least one example embodiment.

### EXAMPLE EMBODIMENT

Hereunder, example embodiments of the present embodiment will be described. However, the following example embodiments do not limit the invention according to the claims. Furthermore, all combinations of features described in the example embodiments may not be essential to the solution means of the invention.

### <First example embodiment>

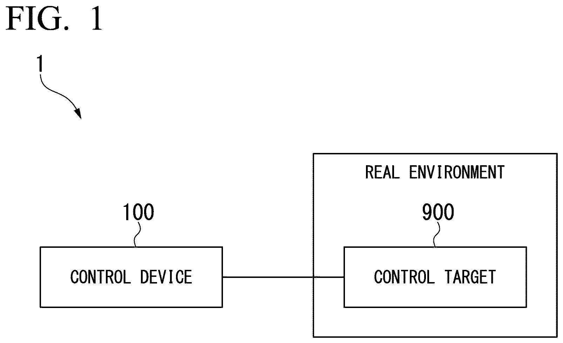

FIG. 1 is a diagram showing an example of a configuration of a control system according to a first example embodiment. **In** the configuration shown in FIG. 1, the control system 1 includes a control device 100 and a control target 900.

The control system 1 is a system in which the control target 900 operates according to a control by the control device 100.

The control device 100 controls the control target 900 such that the control target 900 performs processing subjected to execution. In particular, the control device 100 determines constraint conditions in a caw where the control target 900 performs processing according to an execution environment of the processing. Further, the control device 100 controls the control target 900 based on the determined constraint conditions.

Specifically, the control device 100 stores data in advance in which information related to the execution environment of the processing, and constraint conditions of execution of the processing in the environment are associated with each other. The information related to the execution environment of the processing is also referred to as environment feature information. The data in which information related to the execution environment of the processing, and constraint conditions of execution of the processing in the environment are associated with each other, is also referred to as environment-compliant constraint condition data.

Further, the control device 100 selects environment-compliant constraint condition data corresponding to the execution environment of the processing subjected to execution by comparing the environment feature information included in the environment-compliant constraint condition data, and the environment feature information of the execution environment of the processing subjected to execution. The control device 100 acquires the constraint conditions corresponding to the execution environment of the processing subjected to execution by reading the constraint conditions from the selected environment-compliant constraint condition data.

The control device 100 corresponds to an example of a constraint condition selection device. The processing subjected to execution is also referred to as execution target processing. The execution environment of the execution target processing is also referred to as a real environment. The environment feature information of a real environment is also referred to as real environment feature information.

As a result of the control device 100 acquiring the constraint conditions corresponding to a real environment, it is expected that, in addition to differences in the execution environment of the processing, differences in the execution target processing can also be handled. For example, in the case where the control target 900 moves, a constraint condition that causes a predetermined obstacle to be avoided can be applied to various processing that is accompanied by movement of the control target 900.

Furthermore, the control device 100 may acquire constraint conditions corresponding to not only the real environment, but also the execution target processing. For example, as described below, it is possible to use, as environment feature information, information related to a target state in addition to information related an initial state of the execution environment of the processing.

The control device 100 may, for example, be configured by using a computer such as a personal computer (PC) or a workstation (WS).

The control target 900 operates according to a control by the control device 100. The control target 900 is not limited to a specific object, and can be various controllable objects. The processing performed by the control target 900 can be various processing depending on the control target 900.

For example, the control target 900 may be a multi-joint robot (manipulator). In this case, various processing such as gripping and moving objects, or processing products can be used as the execution target processing depending on the type of end effector.

Furthermore, the control target 900 may also be a mobile body such as an automated guided vehicle or a drone. **In** this case, various processing that is accompanied by movement of the control target 900, such as the transportation of an object, can be used as the execution target processing.

In addition, the control target 900 may be a single device, or may be a system including a plurality of devices, such as a power plant or a chemical plant. In this case, the execution target processing can be various processing depending on the type of device or system.

The execution environment of the processing is also referred to as an operating environment of the control target 900. However, there is no need for a one-to-one correspondence to exist between the execution environment of the processing and the control target 900. In certain specific environments, any one of a plurality of control targets 900 may be selectively operated, or a plurality of control targets 900 may be operated in cooperation with each other. For example, in the case described above where the control target 900 moves, the constraint condition that causes a predetermined obstacle to be avoided can be used in a case where the control target 900 is a variety of devices that move.

The control target 900 itself may be included in the operating environment of the control target 900. For example, the state of the control target 900 may be included in the state of the operating environment of the control target 900.

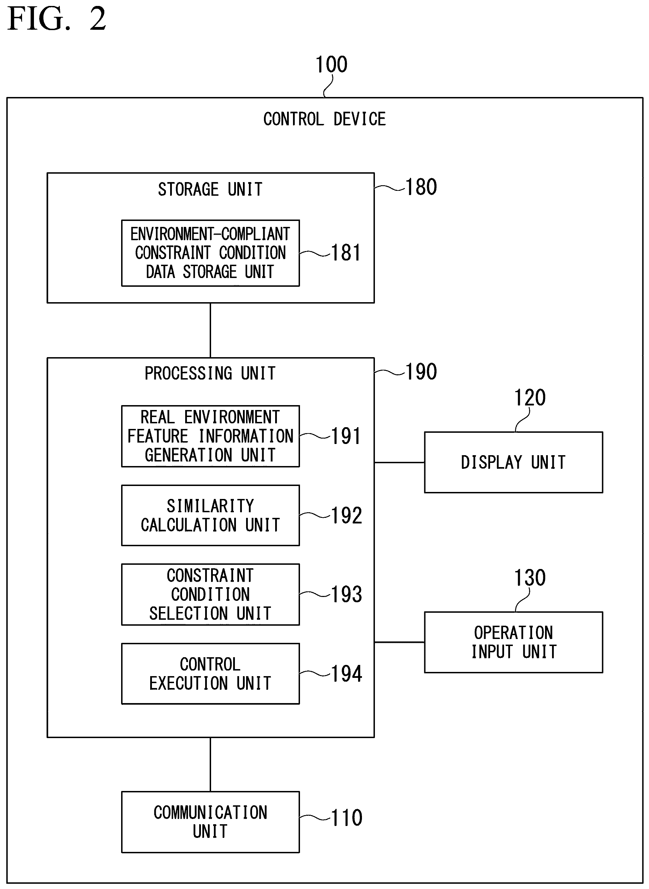

FIG. 2 is a diagram showing an example of a configuration of the control device 100. In the configuration shown in FIG. 2, the control device 100 includes a communication unit 110, a display unit 120, an operation input unit 130, a storage unit 180, and a processing unit 190. The storage unit 180 includes an environment-compliant constraint condition data storage unit 181. The processing unit 190 includes a real environment feature information generation unit 191, a similarity calculation unit 192, a constraint condition selection unit 193, and a control execution unit 194.

The communication unit 110 performs communication with other devices. For example, the communication unit 110 may receive observation data of a real environment from a sensor that observes the real environment. Furthermore, the communication unit 110 may transmit a control command to the control target 900.

The display unit 120 includes, for example, a display screen such as a liquid crystal panel or an LED (light emitting diode) panel, and displays various images. For example, the display unit 120 may display various information related to the execution of processing by the control target 900, such as the constraint conditions selected by the control device 100, or real-time images that have been captured of the control target 900.

The operation input unit 130 includes input devices such as a keyboard and a mouse, and receives user operations. For example, the operation input unit 130 may receive a user operation that specifies the processing to be executed by the control system 1 (processing subjected to execution).

The storage unit 180 stores various data. The storage unit 180 is configured by using a storage device included in the control device 100.

The environment-compliant constraint condition data storage unit 181 stores environment-compliant constraint condition data.

The processing unit 190 performs various processing that controls each unit of the control device 100. The functions of the control unit 190 are executed, for example, as a result of a CPU (central processing unit) included in the control device 100, reading and executing a program from the storage unit 180.

The real environment feature information generation unit 191 generates real environment feature information based on observation data of a real environment from a sensor that observes the real environment. As mentioned above, the real environment feature information is the environment feature information of a real environment. The environment feature information is information related to the execution environment of processing.

The real environment feature information generation unit 191 corresponds to an example of a real environment feature information generation means.

The environment feature information is not limited to specific information, and can be various information that enables calculation of a similarity. For example, the sensor used to generate the real environment feature information can be various sensors depending on the control target 900 and the execution target processing. A camera may be used as the sensor, and the real environment feature information generation unit 191 may acquire a capture image of the real environment as observation data of the real environment. In addition, a sensor that outputs a certain value, such as the air temperature surrounding the control target 900, or a flow rate of raw materials handled by the control target 900, may be used as the sensor, and the real environment feature information generation unit 191 may acquire the sensor measurement value.

The real environment feature information generation unit 191 may also acquire data from a plurality of sensors.

Furthermore, the observation data of the real environment may be used as the real environment feature information as is, or data obtained by processing the observation data may be used. For example, in the case where a capture image of the real environment is used as the observation data, the real environment feature information generation unit 191 may perform image recognition processing with respect to the capture image of the real environment to extract objects that appear in the image. Then, the real environment feature information generation unit 191 may generate, as the real environment feature information, information indicating the attributes or state of each extracted object, such as the position, size, color, material, or a portion of such information, of each extracted object.

Alternatively, the real environment feature information generation unit 191 may use, as the real environment feature information, a capture image of the real environment as is.

The objects that appear in a capture image of a real environment correspond to an example of objects located in a real environment.

Moreover, the format of the real environment feature information is not limited to a specific format. For example, in the case where information indicating the attributes or state of each object located in the real environment is used as the real environment feature information, the real environment feature information may be in a graph (a directed graph or an undirected graph) format. A graph representing the real environment feature information is also referred to as an environment graph.

Alternatively, the real environment feature information may be data in a table format showing, for each object, the attributes or state of the object. Alternatively, the real environment information may be data in a vector format that lists the attributes or state of each object in order.

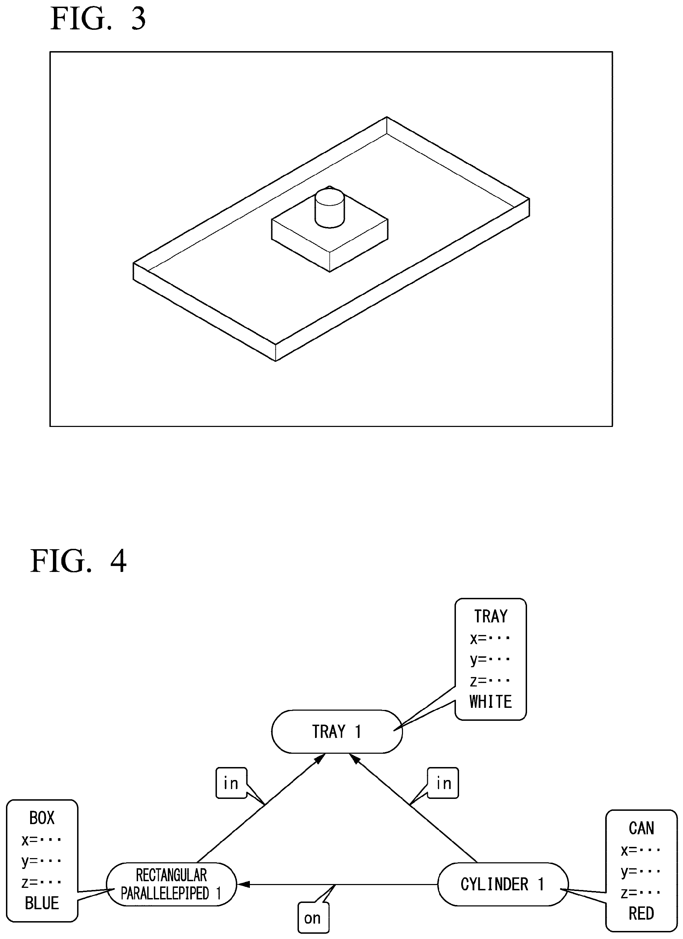

FIG. 3 is a diagram showing an example of a capture image of a real environment. In the example of FIG. 3, a tray, a rectangular parallelepiped box placed inside the tray, and a cylindrical can placed on top of the box appear in the capture image of the real environment. The tray, the box, and the can correspond to examples of objects located in the real environment.

FIG. 4 is a diagram showing a first example of an environment graph. FIG. 4 shows an example of an environment graph that is generated by the real environment feature information generation unit 191 from the capture image of the real environment shown in FIG. 3.

In the example of FIG. 4, the environment graph contains the three nodes "tray 1", "rectangular parallelepiped 1", and "cylinder 1", and edges that indicate the relationship between the nodes.

In the example of FIG. 4, the nodes of the environment graph represent each object that appears in the capture image of the real environment. The node "tray 1" represents the tray. The node "rectangular parallelepiped 1" represents the rectangular parallelepiped box. The node "cylinder 1" represents the cylindrical can. The shape of the objects that appear in the capture image of the real environment are used as identification information of the nodes of the environment graph. In the example of FIG. 4, the shape of the tray is referred to as a "tray". Furthermore, the "1" of "tray 1" and the like is a serial number of each object shape, and is for discriminating between the nodes in the case where there are a plurality of objects having the same shape.

Moreover, in the example of FIG. 4, each node is associated with information indicating the attributes or state of the object represented by the node, namely the type of object ("tray", "box", or "can"), the position of the object ("x = ..."), ("y = ..."), (z = ...")), and the color of the object ("white", "blue", "red").

In addition, in the example of FIG. 4, each edge is associated with a relationship represented by the edge. The relationship "in" indicates a relationship in which the object represented by the node on the starting side of the directed edge is located inside the object represented by the node on the ending side. The relationship "on" indicates a relationship in which the object represented by the node on the starting side of the directed edge is located on the object represented by the node on the ending side.

As shown in the example of FIG. 4, the environment feature information may be represented by an environment graph that includes nodes representing the objects in the environment, and edges indicating the relationship between the nodes.

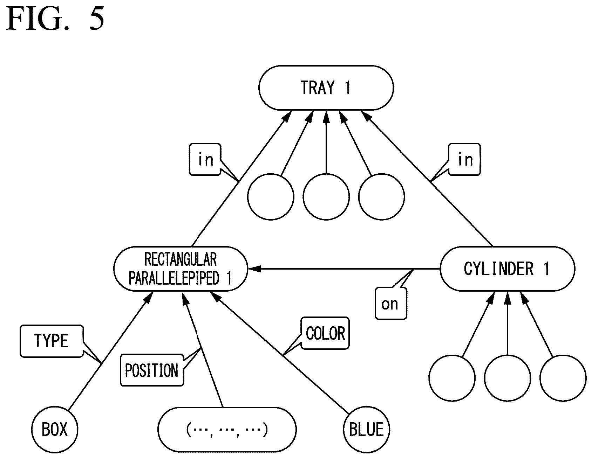

FIG. 5 is a diagram showing a second example of an environment graph. In the example of FIG. 5, in addition to the objects that appear in the capture image of the real environment, the attributes or state of each object are also represented by nodes. A node representing an object and a node representing the type of the object are connected by the edge "type". A node representing an object and a node representing the position of the object are connected by the edge "position". A node representing an object and a node representing the color of the object are connected by the edge "color".

In FIG. 5, in order to make the diagram easier to understand, the nodes and edges for indicating the attributes or state of the object are shown for the tray represented by the node "tray 1" and the can represented by the node "cylinder 1", but illustration of the detailed information of the nodes and edges has been omitted.

As shown in the example of FIG. 5, the environment feature information may be represented by an environment graph including nodes other than the nodes representing objects in the environment.

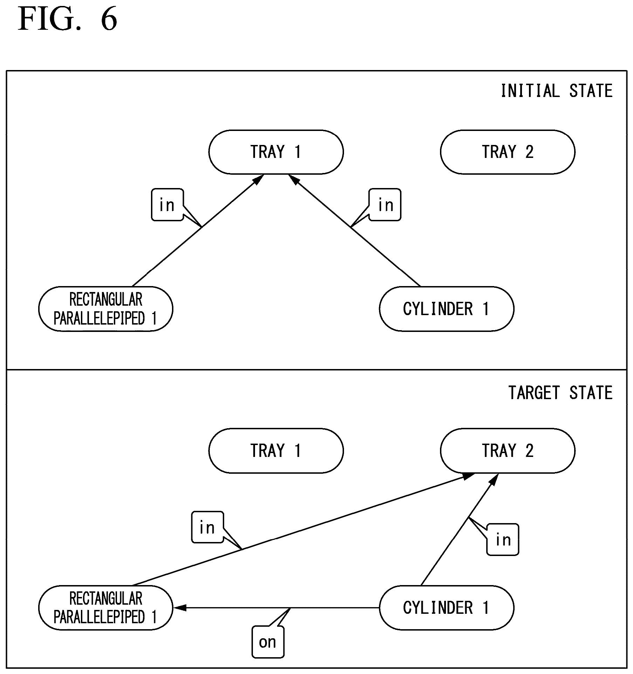

FIG. 6 is a diagram showing a third example of an environment graph. **In** the example of FIG. 6, an environment graph is shown for each of the initial state and target state of the execution environment of the processing. The environment graph showing the initial state represents a state where there are two trays, "tray 1" and "tray 2", and two objects "rectangular parallelepiped 1" and "cylinder 1" that are located inside "tray 1". The environment graph showing the target state represents a state where, of "tray 1" and "tray 2", the two objects "rectangular parallelepiped 1" and "cylinder 1" are located inside "tray 2", and further, "cylinder 1" is located on "rectangular parallelepiped 1".

The example of FIG. 6 represents processing that, by combining the environment graph of the initial state and the environment graph of the target state, moves "rectangular parallelepiped 1" and "cylinder 1" such that the state changes from the initial state to the target state.

As shown in FIG. 6, the environment feature information may include an environment graph of the initial state and an environment graph of the target state.

In this way, it can be said that a combination of an environment graph of the initial state and an environment graph of the target state represents, in addition to information related to the execution environment of the processing, information related to the processing to be executed. As a result of the control device 100 selecting the environment-compliant constraint condition data using environment feature information including an environment graph of the initial state and an environment graph of the target state, it is expected that constraint conditions can be acquired that correspond not only to the real environment, but also to the execution target processing.

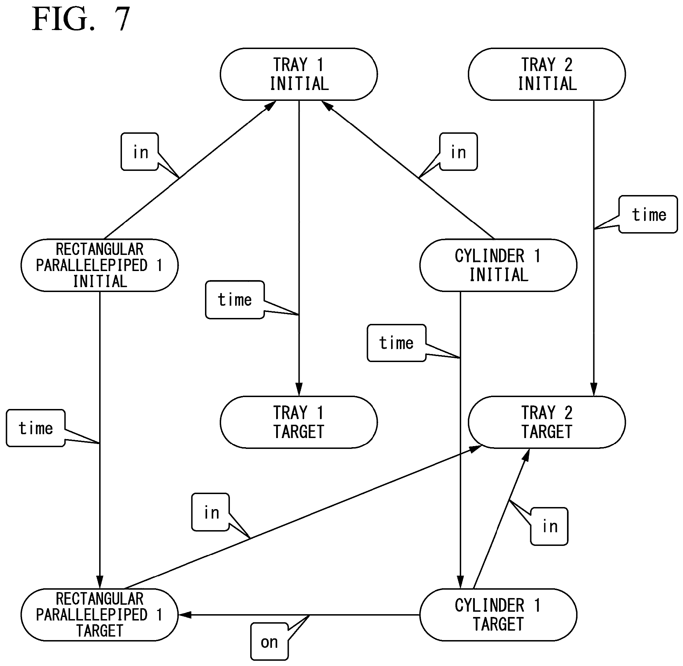

FIG. 7 is a diagram showing a fourth example of an environment graph. FIG. 7 shows an example of an environment graph in which the environment graph of the initial state, and the environment graph of the target state of the example of FIG. 6 have been combined into a single graph. The nodes "tray 1 initial", "tray 2 initial", "rectangular parallelepiped 1 initial", and "cylinder 1 initial" represent the objects in the initial state. The nodes "tray 1 target", "tray 2 target", "rectangular parallelepiped 1 target", and "cylinder 1 target" represent the objects in the target state. The "time" edge represents the passage of time from the initial state to the target state.

The environment feature information may include, as in the example of FIG. 7, an environment graph that combines an environment graph of the initial state and an environment graph of the target state of the execution environment of the processing into a single graph. As a result of the control device 100 selecting the environment-compliant constraint condition data using environment feature information including an environment graph that combines an environment graph of the initial state and an environment graph of the target state of the execution environment of the processing into a single graph, it is expected that, as in the case of the example of FIG. 6, constraint conditions can be acquired that correspond not only to the real environment, but also to the execution target processing.

The similarity calculation unit 192 calculates a similarity of environment feature information. Various indices can be used as the similarity calculated by the similarity calculation unit 192 depending on the environment feature information.

For example, in a case where the environment feature information is represented by a graph (a directed graph or an undirected graph), the similarity calculation unit 192 may use, as a similarity of the environment feature information, the similarity of nodes representing the objects or a partial graph, and a similarity of the edges between the nodes representing the objects.

In the calculation of the similarity of two nodes representing the objects or partial graphs, for example, it is possible to represent the attributes or state of each of the two objects by a vector, and then use an index representing the similarity of the vectors, such as cosine similarity or a norm. **In** the case where a cosine similarity is used as an index representing the similarity of the vectors, a higher index value indicates that the two vectors are more similar. On the other hand, in the case where a norm is used as an index representing the similarity of the vectors, a lower index value indicates that the two vectors are more similar.

In a case where the attributes or state of each of two objects are represented by vectors, the similarity calculation unit 192 arranges the items in the same order in the two vectors, for example, by arranging the items in order of an x-coordinate value, a y-coordinate value, and a z-coordinate value that represent the position. Furthermore, the similarity calculation unit 192 may exclude items for which there is data for only one of the two objects from being included in the vector elements, such that the items are excluded from the similarity determination.

In addition, for items that are represented by a non-numerical value, such as a shape of an object, the similarity calculation unit 192 may, separately to the similarity of the vectors, convert the similarity to a numerical value by setting the similarity to a predetermined value if the value of the item is the same for the two objects, and set the similarity to 0 if the item is different, and then add the similarity to that of the vectors. In the case where a norm is used as an index representing the similarity of the vectors, such that a lower index value indicates that the vectors are more similar, a sufficiently large predetermined value may be used when the values of the same item are different for the two objects, such that the value becomes larger than when the values of the same item are the same for the two objects.

In a calculation of the similarity of nodes representing objects in two graphs, the similarity calculation unit 192 may, for example, associate the nodes representing the objects between the two graphs by maximizing, over the entire graph, an average value of the similarity of the associated nodes. Then, the similarity calculation unit 192 may use the maximum value of the average values of the similarity of the associated nodes over the entire graph, as the similarity of the nodes in the two graphs.

In a calculation of the similarity of edges, for example, in the case where each of the nodes at the both ends of an edge that has been selected one at a time from each of the two graphs, have been associated with each other in the association of the nodes described above, the selected edge may be defined as the same edge. Then, the similarity calculation unit 192 may count the number of same edges over the entire graph. Further, in order to avoid the similarity of edges increasing as the scale of the graphs increases, the similarity calculation unit 192 may use, as the similarity of the edges in the two graphs, a value obtained by dividing the number of same edges over the entire graph by the number of nodes representing objects.

The edges may be used to express not only the connection relationship between nodes, but also various values related to the nodes that are connected by the edges, such as the distance between nodes. The edges may be represented by real numbers, or may be represented by vectors.

In the case where the edges are represented by vectors, an index representing the similarity of the vectors, such as a cosine similarity or a norm, can be used as an index representing the similarity of the edges.

Similarly for the edges, in terms of the items that are represented by a non-numerical value, the similarity calculation unit 192 may, separately to the similarity of the vectors, convert the similarity to a numerical value by setting the similarity to a predetermined value if the value of the item is the same for the two edges, and set the similarity to 0 if the item is different, and then add the value to the similarity of the vectors. **In** the case a norm is used as an index representing the similarity of the vectors, such that a lower index value indicates that the vectors are more similar, a sufficiently large predetermined value may be used when the values of the same item are different for the two objects, such that the value becomes larger than when the values of the same item are the same for the two objects.

Further, the similarity calculation unit 192 may obtain a weighted sum of the similarity of the nodes in the two graphs and the similarity of the edges in the two graphs obtained using predetermined weighting coefficients, and then use the value as the similarity of the two graphs.

Alternatively, the similarity calculation unit 192 may be configured to include a neural network such as a graph neural network (GNN) or a graph convolutional network (GCN), and may learn the calculation of the feature amount of a graph in advance. Then, the similarity calculation unit 192 may use the neural network to calculate the feature amount of an entire graph, and then compare (cluster) the similarity of two graphs based on the calculated feature amount.

Alternatively, the similarity calculation unit 192 may calculate the similarity of two graphs using a kernel function according to a kernel method such as a graph kernel.

In the case where the environment feature information is represented by a real vector (a vector in which the elements are real values), a known index of the similarity of real vectors, such as a cosine similarity or a norm, may be used as the similarity of the environment feature information.

In the case where the environment feature information is represented by an image, a known method of calculating the similarity of images may be used as the calculation method of the similarity of the environment feature information.

The constraint condition selection unit 193 selects, from among the environment-compliant constraint condition data stored in the environment-compliant constraint condition data storage unit 181, the environment-compliant constraint condition data corresponding to the real environment. Specifically, the constraint condition selection unit 193 selects the environment-compliant constraint condition data corresponding to the real environment based on the similarity between the real environment feature information calculated by the similarity calculation unit 192, and the environment feature information included in the environment-compliant constraint condition data.

The constraint condition selection unit 193 corresponds to an example of a constraint condition selection means.

The similarity calculation unit 192 may calculate, for each environment-compliant constraint condition data stored in the environment-compliant constraint condition data storage unit 181, a similarity between the environment feature information included in the environment-compliant constraint condition data, and the real environment feature information. Then, the constraint condition selection unit 193 may select, from among the environment-compliant constraint condition data that is stored in the environment-compliant constraint condition data storage unit 181, the environment-compliant constraint condition data having the highest similarity that has been calculated by the similarity calculation unit 192.

The control execution unit 194 controls the control target 900. Specifically, the control execution unit 194 controls the control target 900 so as to execute the execution target processing based on the constraint conditions indicated by the environment-compliant constraint condition data that has been selected by the constraint condition selection unit 193. The control execution unit 194 generates control commands with respect to the control target 900, and controls the control target 900 by transmitting the generated control commands to the control target 900 via the communication unit 110.

The control execution unit 194 corresponds to an example of a control execution means.

For example, in the case where the execution target processing is for the control target 900 to reach a predetermined target point, as an objective function, an objective function that indicates whether or not the execution target processing has been achieved may be set in advance, such as a function that is set in advance that indicates the distance between the control target 900 and the target point. Further, the control execution unit 194 may search for a time series of control commands with respect to the control target 900 that satisfies the constraint conditions and results in the objective function becoming a value that indicates that the execution target processing has been achieved. Then, the control execution unit 194 may cause the control target 900 to perform the execution target processing by transmitting control commands to the control target 900 according to an obtained time series of control commands.

Alternatively, the constraint condition selection unit 193 may select constraint conditions that include a constraint condition that indicates the target state of the execution target processing. For example, the constraint conditions may be represented by temporal logic, and a constraint condition that states that the control target 900 is positioned at the target point when a predetermined time has elapsed, may be included in the constraint conditions selected by the constraint condition selection unit 193. Further, the control execution unit 194 may search for a time series of control commands with respect to the control target 900 that satisfies the constraint condition. Then, the control execution unit 194 may cause the control target 900 to perform the execution target processing by transmitting control commands to the control target 900 according to the obtained time series of control commands.

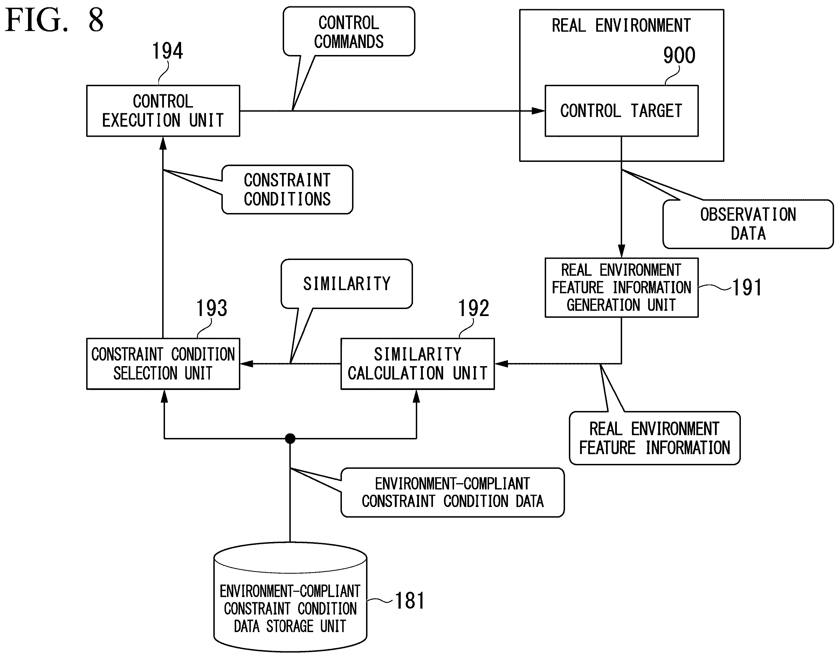

FIG. 8 is a diagram showing an example of a data flow in a case where the control device 100 controls the control target 900.

In the example of FIG. 8, the real environment feature information generation unit 191 generates real environment feature information based on observation data of a real environment from a sensor that observes the real environment.

The similarity calculation unit 192 calculates, for each environment-compliant constraint condition data stored in the environment-compliant constraint condition data storage unit 181, a similarity between the environment feature information included in the environment-compliant constraint condition data, and the real environment feature information.

The constraint condition selection unit 193 selects, from among the environment-compliant constraint condition data that is stored in the environment-compliant constraint condition data storage unit 181, the environment-compliant constraint condition data having the highest similarity that has been calculated by the similarity calculation unit 192.

The control execution unit 194 generates control commands with respect to the control target 900 based on the constraint conditions indicated by the environment-compliant constraint condition data that has been selected by the constraint condition selection unit 193. The control execution unit 194 controls the control target 900 by transmitting the generated control commands to the control target 900 via the communication unit 110.

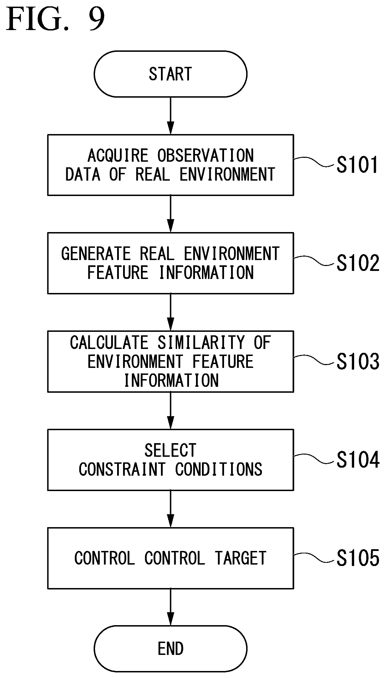

FIG. 9 is a diagram showing an example of a processing procedure by which the control device 100 controls the control target 900.

In the processing of FIG. 9, the real environment feature information generation unit 191 acquires observation data of the real environment (step S101).

Further, the real environment feature information generation unit 191 generates real environment feature information based on the acquired observation data (step S102).

Then, the similarity calculation unit 192 calculates, for each environment-compliant constraint condition data stored in the environment-compliant constraint condition data storage unit 181, a similarity between the environment feature information included in the environment-compliant constraint condition data, and the real environment feature information (step S103).

Next, the constraint condition selection unit 193 selects, from among the environment-compliant constraint condition data that is stored in the environment-compliant constraint condition data storage unit 181, the environment-compliant constraint condition data having the highest similarity that has been calculated by the similarity calculation unit 192 (step S104).

Then, the control execution unit 194 controls the control target 900 based on the constraint conditions indicated by the environment-compliant constraint condition data that has been selected by the constraint condition selection unit 193 (step S105). Specifically, the control execution unit 194 generates control commands with respect to the control target 900 based on the constraint conditions, and transmits the generated control commands to the control target 900 via the communication unit 110.

After step S105, the control device 100 ends the processing of FIG. 9.

As described above, the constraint condition selection unit 193 selects, among environment-compliant constraint condition data in which environment feature information, being information related to an execution environment of processing, and constraint conditions of execution of the processing in the environment are associated with each other, the environment-compliant constraint condition data corresponding to a real environment, which is an execution environment of the processing subjected to execution. The control execution unit 194 controls the control target 900 to execute processing subjected to execution based on the constraint conditions indicated by the selected environment-compliant constraint condition data.

As a result of the control device 100 acquiring the constraint conditions corresponding to a real environment, it is expected that, in addition to differences in the execution environment of the processing, differences in the processing subjected to execution can also be handled. For example, in the case where the control target 900 moves, a constraint condition that causes a predetermined obstacle to be avoided can be applied to various processing that is accompanied by movement of the control target 900.

Furthermore, the real environment feature information generation unit 191 generates real environment feature information, which is environment feature information of a real environment, based on observation data of the real environment from a sensor that observes the real environment. The similarity calculation unit 192 calculates a similarity of the environment feature information. The constraint condition selection unit 193 selects the environment-compliant constraint condition data corresponding to the real environment based on the similarity between the real environment feature information and the environment feature information included in the environment-compliant constraint condition data.

In the control device 100, it is expected that the constraint conditions that are suitable for a real environment can be acquired by selecting the environment-compliant constraint condition data based on the similarity of environment feature information. According to the control device 100, in this respect, it is expected that the control target 900 can be controlled with high accuracy.

Moreover, the environment feature information is represented by a graph including nodes representing the objects in the execution environment of the processing, and edges representing the relationship between the nodes.

According to the control device 100, because the relationship between objects is indicated by the environment feature information, it is expected that the similarity of the processing execution environment can be determined with a high accuracy, and it is expected that the constraint conditions that are suitable for a real environment can be acquired.

### <Second example embodiment>

In a second example embodiment to a fourth example embodiment, examples where a control device generates environment-compliant constraint condition data if there is no environment-compliant constraint condition data that is suitable for a real environment will be described.

In the second embodiment, an example where a control device receives a user operation that inputs constraint conditions corresponding to a real environment and generates environment-compliant constraint condition data will be described.

In the third embodiment, an example where a control device receives a user operation that operates the control target 900 and generates environment-compliant constraint condition data will be described.

In the fourth example, an example where a control device generates environment-compliant constraint condition data based on a simulation of an operation of the control target 900 will be described.

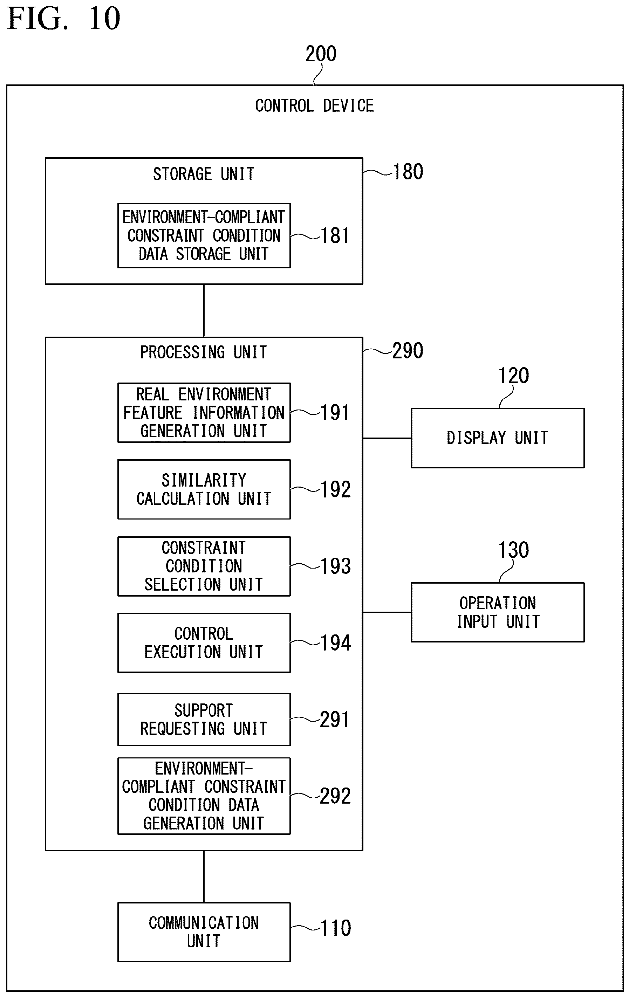

FIG. 10 is a diagram showing an example of a configuration of a control device according to a second example embodiment. In the configuration shown in FIG. 10, the control device 200 includes a communication unit 110, a display unit 120, an operation input unit 130, a storage unit 180, and a processing unit 290. The processing unit 290 includes a real environment feature information generation unit 191, a similarity calculation unit 192, a constraint condition selection unit 193, a control execution unit 194, a support requesting unit 291, and an environment-compliant constraint condition data generation unit 292.

In the second example embodiment, the control device 200 is used instead of the control device 100 of FIG. 1.

Of the units in FIG. 10, those units having the same functions as the units shown in FIG. 1 are designated by the same reference symbols (110, 120, 130, 180, 181, 191, 192, 193, and 194), and a detailed description will be omitted here.

The control device 200 differs from the control device 100 in that the processing unit 290 includes the support requesting unit 291 and the environment-compliant constraint condition data generation unit 292 in addition to the units included in the processing unit 190. The control device 200 is the same as the control device 100 in all other respects.

The support requesting unit 291 requests a user operation if there is no environment-compliant constraint condition data among the environment-compliant constraint condition data stored in the environment-compliant constraint condition data storage unit 181 that includes environment feature information whose the similarity with the real environment feature information is equal to or greater than a predetermined threshold. The threshold referred to here is, for example, set in advance by the user, and is stored in the storage unit 180.

The support requesting unit 291 corresponds to an example of a support requesting means.

For example, the support requesting unit 291 may control the display unit 120 to display a message indicating that a control plan of the control target 900 cannot be created, and that support from the user is requested.

Alternatively, in the second example embodiment, the support requesting unit 291 may control the display unit 120 to display a message for requesting an input of the constraint conditions of the operation of the control target 900.

In the case where there is no environment-compliant constraint condition data among the environment-compliant constraint condition data stored in the environment-compliant constraint condition data storage unit 181 that includes environment feature information whose similarity with real environment feature information is equal to or greater than a predetermined threshold, the environment-compliant constraint condition data generation unit 292 generates environment-compliant constraint condition data in which the real environment feature information and the constraint conditions in the real environment are associated with each other.

The environment-compliant constraint condition data generation unit 292 corresponds to an example of an environment-compliant constraint condition data generation means.

In the second example embodiment, the environment-compliant constraint condition data generation unit 292 generates environment-compliant constraint condition data by associating the real environment characteristic information generated by the real environment feature information generation unit 191, and the constraint conditions input by the user. The user may also input constraint conditions that include a constraint condition that indicates the target state of the execution target processing. In this case, the environment-compliant constraint condition data generation unit 292 generates environment-compliant constraint condition data in which the real environment characteristic information and the constraint conditions including a constraint condition indicating the target state in the execution target processing have been associated with each other.

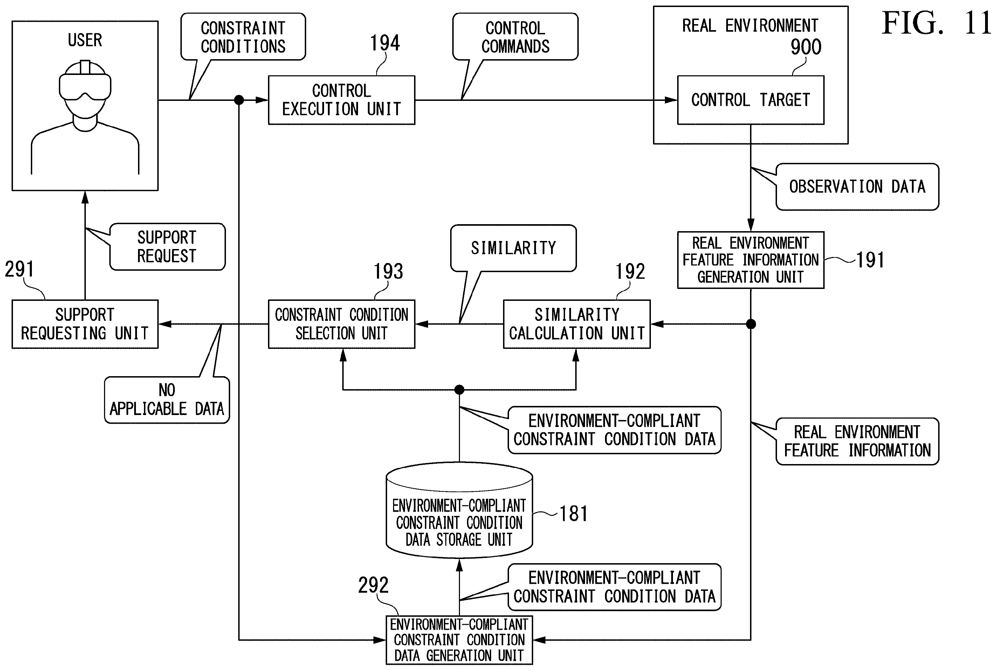

FIG. 11 is a diagram showing an example of a data flow in the case where the control device 200 newly generates environment-compliant constraint condition data.

In the example of FIG. 11, the data flow in the real environment feature information generation unit 191 and the similarity calculation unit 192 is the same as the case of FIG. 8.

Specifically, the real environment feature information generation unit 191 generates real environment feature information based on observation data of a real environment from a sensor that observes the real environment. The similarity calculation unit 192 calculates, for each environment-compliant constraint condition data stored in the environment-compliant constraint condition data storage unit 181, a similarity between the environment feature information included in the environment-compliant constraint condition data, and the real environment feature information.

The constraint condition selection unit 193 determines whether or not there is environment-compliant constraint condition data that indicates that the similarity calculated by the similarity calculation unit 192 is equal to or greater than a predetermined threshold. The data flow in the constraint condition selection unit 193 and the control execution unit 194 in the case where the constraint condition selection unit 193 determines that there is applicable environment-compliant constraint condition data, is the same as that described with reference to FIG. 8. Therefore, the illustration and description will be omitted here.

On the other hand, in the case where it is determined that there is no environment-compliant constraint condition data indicating that the similarity calculated by the similarity calculation unit 192 is equal to or greater than the predetermined threshold, the constraint condition selection unit 193 outputs information to the support requesting unit 291 indicating that there is no applicable environment-compliant constraint condition data.

The support requesting unit 291 requests support from the user if an input of information is received indicating that there is no applicable environment-compliant constraint condition data. For example, as mentioned above, the support requesting unit 291 may control the display unit 120 to display a message indicating that a control plan of the control target 900 cannot be created, and that support from the user is requested.

In the second example embodiment, the user that has received the request for support inputs the constraint conditions to the control device 200. The control execution unit 194 generates control commands with respect to the control target 900 so as to satisfy the constraint conditions input by the user, and transmits the generated control commands to the control target 900 via the communication unit 110.

Furthermore, the environment-compliant constraint condition data generation unit 292 generates environment-compliant constraint condition data by associating the real environment feature information generated by the real environment feature information generation unit 191, and the constraint conditions input by the user. The environment-compliant constraint condition data generation unit 292 stores the generated environment-compliant constraint condition data in the environment-compliant constraint condition data storage unit 181. As a result, the environment-compliant constraint condition data generated by the environment-compliant constraint condition data generation unit 292 is added to the environment-compliant constraint condition data stored in the environment-compliant constraint condition data storage unit 181.

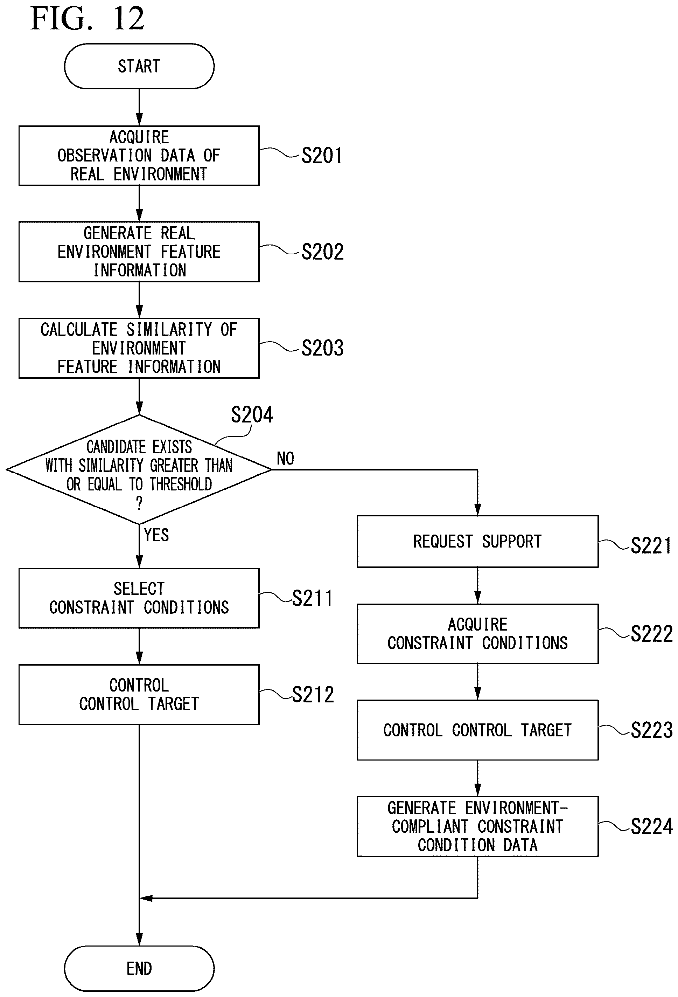

FIG. 12 is a diagram showing an example of a processing procedure by which the control device 200 controls the control target 900.

Steps S201 to S203 in FIG. 12 are the same as steps S101 to S103 in FIG. 9.

After step S203, the constraint condition selection unit 193 determines whether or not there is environment-compliant constraint condition data that indicates that the similarity calculated by the similarity calculation unit 192 is equal to or greater than a predetermined threshold (step S204).

In the case where the constraint condition selection unit 193 determines that there is applicable environment-compliant constraint condition data (step S204: YES), the processing proceeds to step S211.

Steps S211 to S212 are the same as steps S104 to S105 in FIG. 9.

After step S212, the control device 200 ends the processing of FIG. 12.

On the other hand, in step S204, in the case where the constraint condition selection unit 193 determines that there is no applicable environment-compliant constraint condition data (step S204: NO), the support requesting unit 291 requests support from the user (step S221).

Then, the control device 100 acquires constraint conditions that are input by the user (step S222). For example, the operation input unit 130 receives a user operation that inputs the constraint conditions.

Then, the control execution unit 194 controls the control target 900 so as to satisfy the constraint conditions input by the user (step S223).

Furthermore, the environment-compliant constraint condition data generation unit 292 generates environment-compliant constraint condition data by associating the real environment feature information generated by the real environment feature information generation unit 191, and the constraint conditions input by the user, and stores the generated environment-compliant constraint condition data in the environment-compliant constraint condition data storage unit 181 (step S224).

After step S224, the control device 200 completes the processing of FIG. 12.

As described above, the environment-compliant constraint condition data generation unit 292 generates, in the case where there is no environment-compliant constraint condition data that includes environment feature information whose similarity with real environment feature information is equal to or greater than a predetermined threshold, environment-compliant constraint condition data in which the real environment feature information and the constraint conditions of the real environment are associated with each other.

According to the control device 200, it is expected that environment-compliant constraint condition data that is suitable for the real environment can be added in a case where there is no environment-compliant constraint condition data that is suitable for the real environment.

Furthermore, the support requesting unit 291 requests a user operation in the case that there is no environment-compliant constraint condition data that includes environment feature information in which the similarity with the real environment feature information is equal to or greater than a predetermined threshold. The environment-compliant constraint condition data generation unit 292 generates, based on the user operation, environment-compliant constraint condition data in which the real environment feature information and the constraint conditions of the real environment are associated with each other.

According to the control device 200, because the environment-compliant constraint condition data is generated based on a user operation, it is expected that environment-compliant constraint condition data that is suitable for the real environment can be added.

Furthermore, the environment-compliant constraint condition data generation unit 292 generates environment-compliant constraint condition data in which the real environment feature information and the constraint conditions input by a user operation are associated with each other.

According to the control device 200, because the environment-compliant constraint condition data is generated using the constraint conditions input by the user, it is expected that environment-compliant constraint condition data that is suitable for the real environment can be added.

### <Third example embodiment>

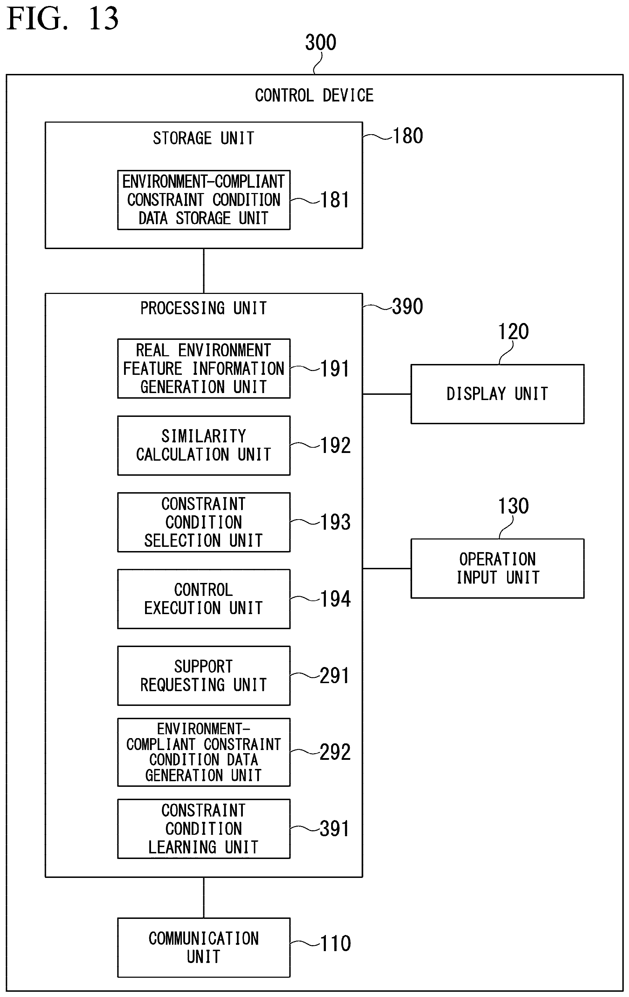

FIG. 13 is a diagram showing an example of a configuration of a control device according to a third example embodiment. In the configuration shown in FIG. 13, the control device 300 includes a communication unit 110, a display unit 120, an operation input unit 130, a storage unit 180, and a processing unit 390. The processing unit 390 includes a real environment feature information generation unit 191, a similarity calculation unit 192, a constraint condition selection unit 193, a control execution unit 194, a support requesting unit 291, an environment-compliant constraint condition data generation unit 292, and a constraint condition learning unit 391.

In the third example embodiment, the control device 300 is used instead of the control device 100 of FIG. 1.

Of the units in FIG. 13, those units having the same functions as the units shown in FIG. 10 are designated by the same reference symbols (110, 120, 130, 180, 181, 191, 192, 193, 194, 291, and 292), and a detailed description will be omitted here.

The control device 300 differs from the control device 200 in that the processing unit 390 includes the constraint condition learning unit 391 in addition to the units included in the processing unit 290. The control device 300 is the same as the control device 200 in all other respects.

The constraint condition learning unit 391 learns constraint conditions based on a time series of operations of the control target 900.

In the third example embodiment, the constraint condition learning unit 391 learns constraint conditions based on a time series of operations of the control target 900 that correspond to user operations. In the third example embodiment, the constraint condition learning unit 391 can be said to learn control conditions based on user operations that operate the control target 900.

For example, the storage unit 180 stores in advance constraint conditions that include parameters. A constraint condition that includes parameters is also referred to as a constraint condition template.

Further, the constraint condition learning unit 391 determines the values of the parameters of a constraint condition template based on a time series of operations of the control target 900.

In addition, for example, the storage unit 180 stores a plurality of constraint condition templates. Furthermore, the control device 300 acquires a plurality of time series of operations of the control target 900.

Then, the constraint condition learning unit 391 adopts constraint condition templates that have parameter values that satisfy the constraint conditions for the entire time series in the case where the execution target processing has succeeded. On the other hand, the constraint condition learning unit 391 does not adopt constraint condition templates that do not have parameter values that satisfy the constraint conditions for the entire time series in the case where the execution target processing has succeeded.

Here, a case where the execution target processing has succeeded is a case where the execution target processing was achieved. A case where the execution target processing could not be achieved is also referred to as a case where the execution target processing has failed.

Alternatively, the constraint condition learning unit 391 may determine whether or not to adopt constraint condition templates based on whether or not they have parameter values that, for a time series of operations of the control target 900 in the case where the execution target processing has succeeded, satisfy the constraint conditions in a proportion at least as high as a predetermined proportion. For example, the constraint condition learning unit 391 may adopt constraint condition templates that have parameter values that, of the time series in the case where the execution target processing has succeeded, satisfy the constraint conditions for a predetermined proportion or more of the time series. On the other hand, the constraint condition learning unit 391 may not adopt constraint condition templates that do not satisfy a condition that they have parameter values that, of the time series in the case where the execution target processing has succeeded, satisfy the constraint conditions for a predetermined proportion or more of the time series.

Here, a case in which it is possible for the control device 300 to obtain both a time series of operations of the control target 900 in the case where the execution target processing has succeeded, and a time series of operations of the control target 900 in the case where the execution target processing has failed, will be considered. **In** the third example embodiment, a case where the user performs both operations that cause the execution target processing to succeed, and operations that cause the execution target processing to fail, corresponds to a case where it is possible for the control device 300 to obtain both a time series of operations of the control target 900 in the case where the execution target processing has succeeded, and a time series of operations of the control target 900 in the case where the execution target processing has failed.

In this case, the constraint condition learning unit 391 searches for and sets a combination of parameter values such that, for the combination of all of the parameters of the constraint condition templates that have been adopted, the constraint conditions are satisfied in the case where the execution target processing is successful, and the constraint conditions are not satisfied in the case where the execution target processing fails.

Here, the constraint condition being satisfied in the case where the execution target processing is successful means that the constraint conditions are satisfied for all of the constraint condition templates for a time series of operations of the control target 900 in the case where the execution target processing has succeeded. Furthermore, the constraint condition not being satisfied in the case where the execution target processing fails, means that the constraint conditions are not satisfied for at least one of the constraint condition templates for a time series of operations of the control target 900 in the case where the execution target processing has failed.

In the case where a combination of parameter values cannot be obtained such that the constraint conditions are satisfied in the case where the execution target processing is successful, and the constraint conditions are not satisfied in the case where the execution target processing fails, the constraint condition learning unit 391 may change one or more of the constraint condition templates that have been adopted to be not adopted.

Here, the condition that "the constraint conditions are satisfied in the case where the execution target processing is successful" may also be relaxed to "the constraint conditions are satisfied in a proportion at least as high as a predetermined proportion in the case where the execution target processing is successful". For example, the constraint condition learning unit 391 may search for and set a combination of parameter values such that, for the combination of all of the parameters of the constraint condition templates that have been adopted, the constraint conditions are satisfied for a predetermined proportion or more of the time series among the time series in the case where the execution target processing has succeeded, and the constraint conditions are not satisfied for all of the time series in the case where the execution target processing has failed. In the case where such a combination of parameter values cannot be obtained, the constraint condition learning unit 391 may change one or more of the constraint condition templates that have been adopted to be not adopted.

Next, a case in which the control device 300 can obtain a time series of operations of the control target 900 in the case where the execution target processing has succeeded, but cannot obtain a time series of operations of the control target 900 in the case where the execution target processing has failed, will be considered.

In this case, the constraint condition learning unit 391 searches for and sets a combination of parameter values such that, for the combination of all of the parameters of the constraint condition templates that have been adopted, the constraint conditions are satisfied for all of the constraint condition templates for a time series of operations of the control target 900 in the case where the execution target processing has succeeded.

The constraint condition learning unit 391 may set a combination of parameter values such that the constraint conditions become as strict as possible. For example, for a parameter that represents a radius of a region that the control target 900 must not enter, the constraint condition learning unit 391 may set as the parameter value, a maximum radius among the radii that satisfy the constraint condition with respect to the time series of operations of the control target 900 in the case where the execution target processing has succeeded.

Furthermore, if a combination of parameter values cannot be obtained such that the constraint conditions are satisfied for all of the constraint condition templates with respect to the time series of operations of the control target 900 in the case where the execution target processing has succeeded, the constraint condition learning unit 391 may change one or more of the constraint condition templates that have been adopted to be not adopted.

In this case, those conditions that requires all of the time series in the case where the execution target processing has succeeded may be relaxed to a condition that requires a proportion at least as high as a predetermined proportion of the time series among the time series in the case where the execution target processing has succeeded. For example, the constraint condition learning unit 391 may search for and set a combination of parameter values such that, for the combination of all of the parameters of the constraint condition templates that have been adopted, the constraint conditions are satisfied for all of the constraint condition templates for a predetermined proportion or more of the time series among the time series of operations of the control target 900 in the case where the execution target processing has succeeded.

In this case, a combination of parameter values such that the constraint conditions are as strict as possible can be set by setting a combination of parameter values such that the constraint conditions are satisfied for the time series that have been selected as a predetermined proportion or more of the time series, and setting a combination of parameter values such that the constraint conditions are as strict as possible. For example, for a parameter that represents a radius of a region that the control target 900 must not enter, the constraint condition learning unit 391 may set as the parameter value, a maximum radius among the radii that satisfy the constraint condition for the time series that have been selected as a predetermined proportion or more of the time series.

However, the method by which the constraint condition learning unit 391 learns the constraint conditions is not limited to a specific method, and various methods can be used to obtain constraint conditions that are consistent with the time series of operations of the control target 900, and whether or not the execution target processing of that time series is successful.

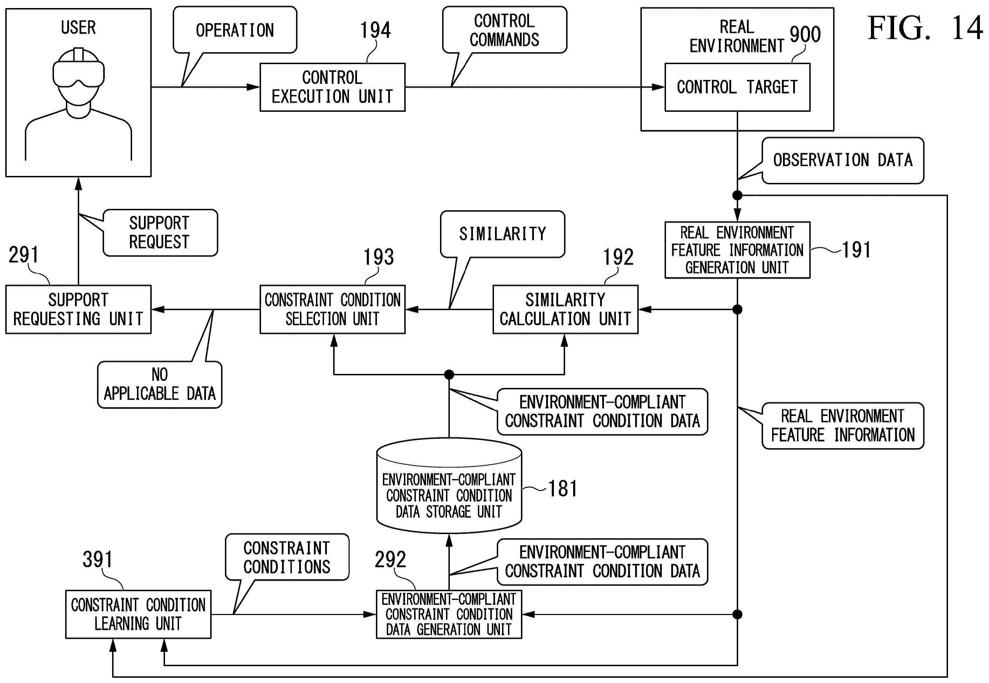

FIG. 14 is a diagram showing an example of a data flow in the case where the control device 300 newly generates environment-compliant constraint condition data.

In the example of FIG. 14, the data flow in the real environment feature information generation unit 191, the similarity calculation unit 192, and the constraint condition selection unit 193 is the same as the case of FIG. **11****.**

Specifically, the real environment feature information generation unit 191 generates real environment feature information based on observation data of a real environment from a sensor that observes the real environment. The similarity calculation unit 192 calculates, for each environment-compliant constraint condition data stored in the environment-compliant constraint condition data storage unit 181, a similarity between the environment feature information included in the environment-compliant constraint condition data, and the real environment feature information.

The constraint condition selection unit 193 determines whether or not there is environment-compliant constraint condition data that indicates that the similarity calculated by the similarity calculation unit 192 is equal to or greater than a predetermined threshold. The data flow in the constraint condition selection unit 193 and the control execution unit 194 in the case where the constraint condition selection unit 193 determines that there is applicable environment-compliant constraint condition data, is the same as that described with reference to FIG. 8. Therefore, the illustration and description will be omitted here.

On the other hand, in the case where it is determined that there is no environment-compliant constraint condition data indicating that the similarity calculated by the similarity calculation unit 192 is equal to or greater than the predetermined threshold, the constraint condition selection unit 193 outputs information to the support requesting unit 291 indicating that there is no applicable environment-compliant constraint condition data.

Furthermore, in the same manner as described with reference to FIG. 11, the support requesting unit 291 requests support from the user in a case where an input of information is received indicating that there is no applicable environment-compliant constraint condition data. For example, the support requesting unit 291 may control the display unit 120 to display a message indicating that a control plan of the control target 900 cannot be created, and that support from the user is requested.

In the third example embodiment, the user that has received a request for support performs an operation with respect to the control target 900. For example, the support requesting unit 291 may control the display unit 120 to display a message for requesting operations with respect to the control target 900. Furthermore, the operation input unit 130 may receive user operations with respect to the control target 900. For example, the user may use a keyboard provided in the operation input unit 130 to input control commands with respect to the control target 900. Alternatively, the operation input unit 130 may receive user operations by including an operation device, such as a joystick, for performing operations with respect to the control target 900.

The control execution unit 194 generates the control commands with respect to the control target 900 according to the user operations made with respect to the control target 900, and transmits the control commands to the control target 900 via the communication unit 110. As a result, the control execution unit 194 is operated according to the user operations.

Furthermore, the constraint condition learning unit 391 acquires observation data of the real environment when the user is performing operations with respect to the control target 900. The observation data of the real environment is assumed to include, for example, data representing the motions of the control target 900, such as the position of the control target 900.

The constraint condition learning unit 391 learns the constraint conditions of the real environment based on the observation data of the real environment, and outputs the constraint conditions that have been obtained to the environment-compliant constraint condition data generation unit 292.

The environment-compliant constraint condition data generation unit 292 generates environment-compliant constraint condition data by associating the real environment feature information generated by the real environment feature information generation unit 191, and the constraint condition obtained by learning performed by the constraint condition learning unit 391. The environment-compliant constraint condition data generation unit 292 stores the generated environment-compliant constraint condition data in the environment-compliant constraint condition data storage unit 181. As a result, the environment-compliant constraint condition data generated by the environment-compliant constraint condition data generation unit 292 is added to the environment-compliant constraint condition data stored in the environment-compliant constraint condition data storage unit 181.

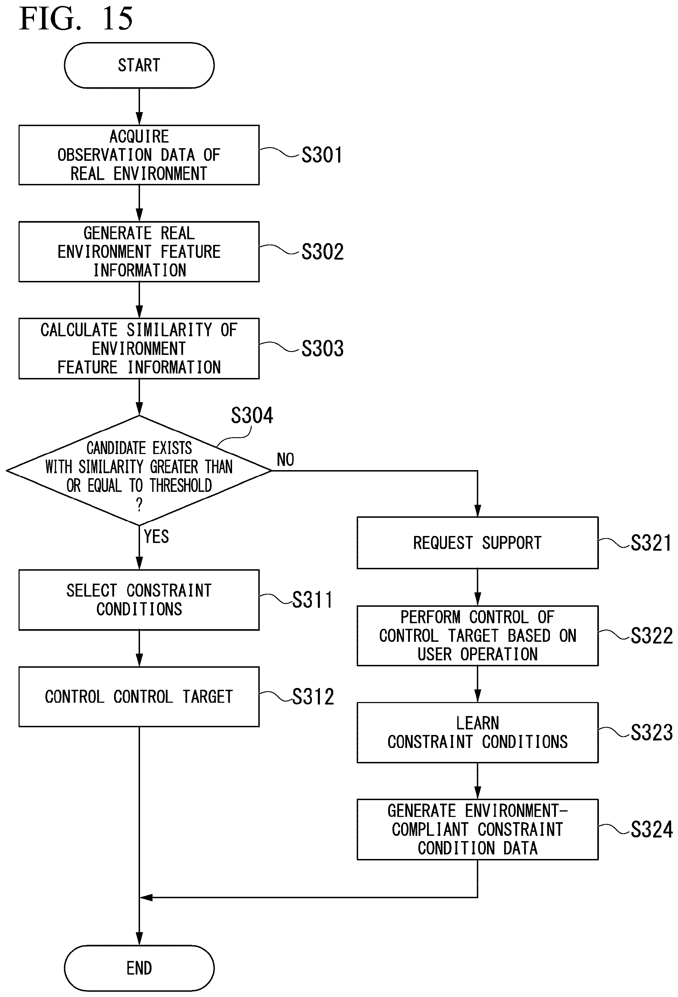

FIG. 15 is a diagram showing an example of a processing procedure by which the control device 300 controls the control target 900.

Steps S301 to S304 in FIG. 15 are the same as steps S201 to S204 in FIG. 12.

In step S304, in the case where the constraint condition selection unit 193 determines that there is applicable environment-compliant constraint condition data (step S304: YES), the processing proceeds to step S311.

Steps S311 to S312 are the same as steps S211 to S212 in FIG. 12.

On the other hand, in step S304, in the case where the constraint condition selection unit 193 determines that there is no applicable environment-compliant constraint condition data (step S304: NO), the support requesting unit 291 requests support from the user (step S321).

Further, the control device 100 controls the control target 900 based on operations performed by the user with respect to the control target 900 (step S322).

Then, the constraint condition learning unit 391 learns the constraint conditions based on a time series of operations of the control target 900 when the user is performing operations with respect to the control target 900 (step S323).

The environment-compliant constraint condition data generation unit 292 generates environment-compliant constraint condition data by associating the real environment feature information generated by the real environment feature information generation unit 191, and the constraint conditions obtained by learning performed by the constraint condition learning unit 391, and stores the generated environment-compliant constraint condition data in the environment-compliant constraint condition data storage unit 181 (step S324).

After step S324, the control device 300 ends the processing of FIG. 15.

As described above, the constraint condition learning unit 391 learns the constraint conditions based on user operations that operate the control target 900. The environment-compliant constraint condition data generation unit 292 generates environment-compliant constraint condition data in which the real environment feature data, and the constraint conditions obtained by learning are associated with each other.

According to the control device 300, because the constraint conditions are learned based on user operations that operate the control target 900, it is expected that it is possible to learn constraint conditions in the case where execution of the execution target processing is successful.

### <Fourth example embodiment>

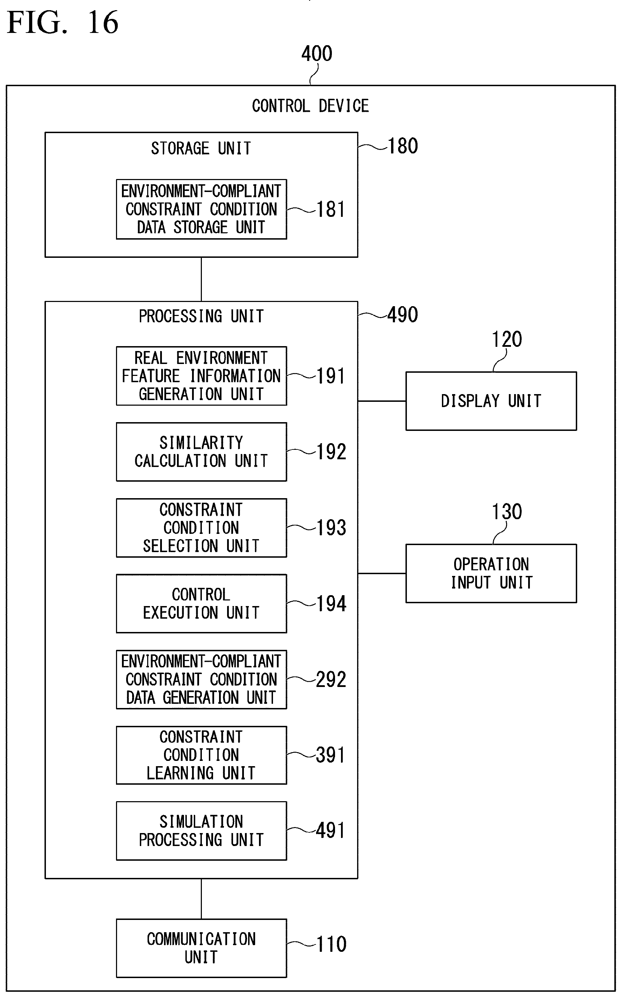

FIG. 16 is a diagram showing an example of a configuration of a control device according to a fourth example embodiment. In the configuration shown in FIG. 16, the control device 400 includes a communication unit 110, a display unit 120, an operation input unit 130, a storage unit 180, and a processing unit 490. The processing unit 490 includes a real environment feature information generation unit 191, a similarity calculation unit 192, a constraint condition selection unit 193, a control execution unit 194, an environment-compliant constraint condition data generation unit 292, a constraint condition learning unit 391, and a simulation processing unit 491.

In the fourth example embodiment, the control device 400 is used instead of the control device 100 of FIG. 1.

Of the units in FIG. 16, those units having the same functions as the units shown in FIG. 13 are designated by the same reference symbols (110, 120, 130, 180, 181, 191, 192, 193, 194, 292, and 391), and a detailed description will be omitted here.

The control device 400 differs from the control device 300 in that the processing unit 490 does not include the support requesting unit 291 among the units included in the processing unit 390, but includes the simulation processing unit 491. The control device 400 is the same as the control device 300 in all other respects.

In the fourth example embodiment, the constraint condition learning unit 391 learns the constraint conditions based on a simulation result of the execution target processing in an environment that simulates the real environment, instead of operations performed by the user with respect to the control target 900.

The simulation processing unit 491 performs a simulation of operations of the control target 900. In particular, the simulation processing unit 491 receives a setting of an environment that simulates the real environment, and performs a simulation of the case where the control target 900 performs motions to perform the execution target processing in the environment that has been set. The simulation in such a case corresponds to a simulation of the processing subjected to execution in an environment that simulates the real environment.

The control device 400 corresponds to an example of a data generation device.

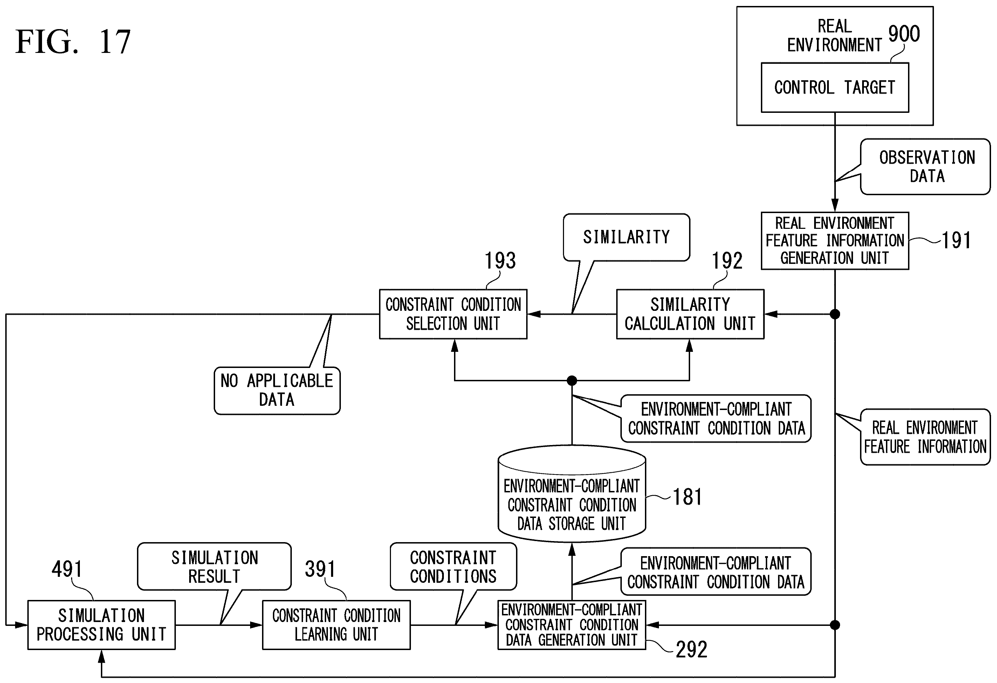

FIG. 17 is a diagram showing an example of a data flow in the case where the control device 400 newly generates environment-compliant constraint condition data.

In the example of FIG. 17, the data flow in the real environment feature information generation unit 191, the similarity calculation unit 192, and the constraint condition selection unit 193 is the same as the case of FIG. **11****.**

Specifically, the real environment feature information generation unit 191 generates real environment feature information based on observation data of a real environment from a sensor that observes the real environment. The similarity calculation unit 192 calculates, for each environment-compliant constraint condition data stored in the environment-compliant constraint condition data storage unit 181, a similarity between the environment feature information included in the environment-compliant constraint condition data, and the real environment feature information.

The constraint condition selection unit 193 determines whether or not there is environment-compliant constraint condition data that indicates that the similarity calculated by the similarity calculation unit 192 is equal to or greater than a predetermined threshold. The data flow in the constraint condition selection unit 193 and the control execution unit 194 in the case where the constraint condition selection unit 193 determines that there is applicable environment-compliant constraint condition data, is the same as that described with reference to FIG. 8. Therefore, the illustration and description will be omitted here.

On the other hand, in the case where it is determined that there is no environment-compliant constraint condition data indicating that the similarity calculated by the similarity calculation unit 192 is equal to or greater than the predetermined threshold, the constraint condition selection unit 193 outputs information to the simulation processing unit 491 indicating that there is no applicable environment-compliant constraint condition data.

If the simulation processing unit 491 receives an input of information indicating that there is no applicable environment-compliant constraint condition data, it performs a simulation of the processing subjected to execution in an environment simulating the real environment, and outputs the simulation result to the constraint condition learning unit 391.

The constraint condition learning unit 391 learns the constraint conditions based on the simulation result from the simulation processing unit 491. The time series of operations of the control target 900 performed by user operations in the third example embodiment has been replaced by a time series of operations of the control target 900 in the simulation performed by the simulation processing unit 491.

The constraint condition learning unit 391 outputs the constraint conditions obtained by learning to the environment-compliant constraint condition data generation unit 292.

The data flow in the environment-compliant constraint condition data generation unit 292 is the same as in the case of FIG. 14.

Specifically, the environment-compliant constraint condition data generation unit 292 generates environment-compliant constraint condition data by associating the real environment feature information generated by the real environment feature information generation unit 191, and the constraint condition obtained by learning performed by the constraint condition learning unit 391. The environment-compliant constraint condition data generation unit 292 stores the generated environment-compliant constraint condition data in the environment-compliant constraint condition data storage unit 181. As a result, the environment-compliant constraint condition data generated by the environment-compliant constraint condition data generation unit 292 is added to the environment-compliant constraint condition data stored in the environment-compliant constraint condition data storage unit 181.

In this case, it is expected that the similarity calculated by the similarity calculation unit 192 with respect to the environment-compliant constraint condition data that has been added, indicates that the similarity between the environment feature information included in the environment-compliant constraint condition data and the real environment feature information is equal to or greater than a threshold. As a result of the constraint condition selection unit 193 selecting the constraint conditions included in the environment-compliant constraint condition data that has been added, and the control execution unit 194 performing a control with respect to the control target 900 based on the selected constraint conditions, the execution target processing is expected to be successful.

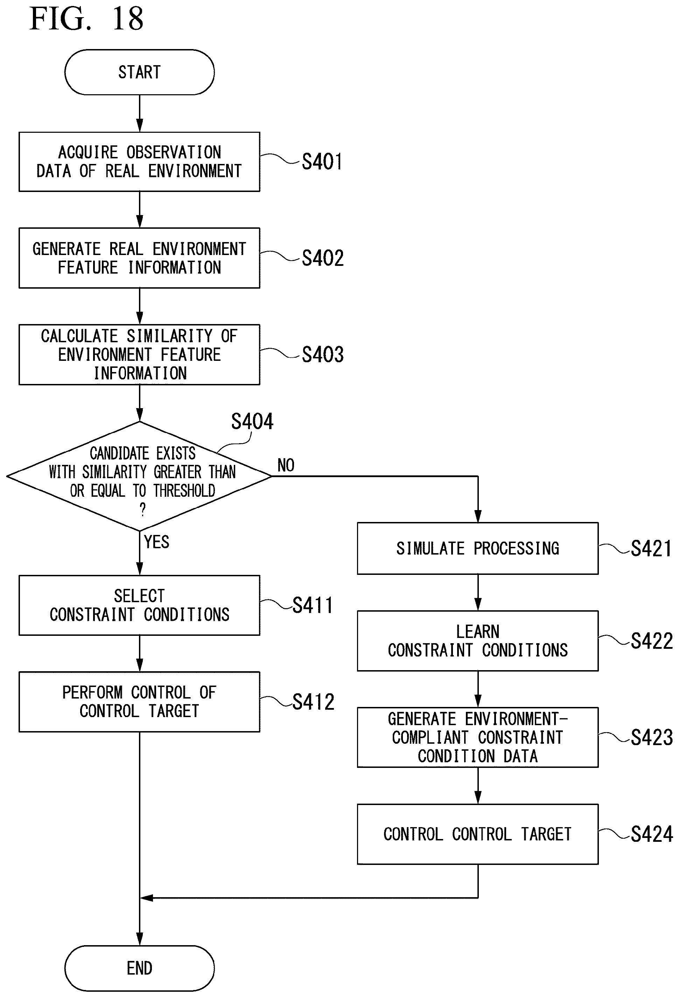

FIG. 18 is a diagram showing an example of a processing procedure by which the control device 400 controls the control target 900.

Steps S401 to S404 in FIG. 18 are the same as steps S201 to S204 in FIG. 12.

In step S404, in the case where the constraint condition selection unit 193 determines that there is applicable environment-compliant constraint condition data (step S404: YES), the processing proceeds to step S411.

Steps S411 to S412 are the same as steps S211 to S212 in FIG. 12.

On the other hand, in step S404, in the case where the constraint condition selection unit 193 determines that there is no applicable environment-compliant constraint condition data (step S404: NO), the simulation processing unit 491 performs a simulation of the processing subjected to execution in an environment that simulates the real environment (step S421).

Then, the constraint condition learning unit 391 learns the constraint conditions based on a time series of operations of the control target 900 in a simulation (step S422).

The environment-compliant constraint condition data generation unit 292 generates environment-compliant constraint condition data by associating the real environment feature information generated by the real environment feature information generation unit 191, and the constraint condition obtained by learning performed by the constraint condition learning unit 391, and stores the generated environment-compliant constraint condition data in the environment-compliant constraint condition data storage unit 181 (step S423).

Furthermore, the constraint condition selection unit 193 selects the newly generated environment-compliant constraint condition data, and the control execution unit 194 controls the control target 900 based on the constraint conditions included in the newly generated environment-compliant constraint condition data (step S424).

After step S424, the control device 400 ends the processing of FIG. 18.

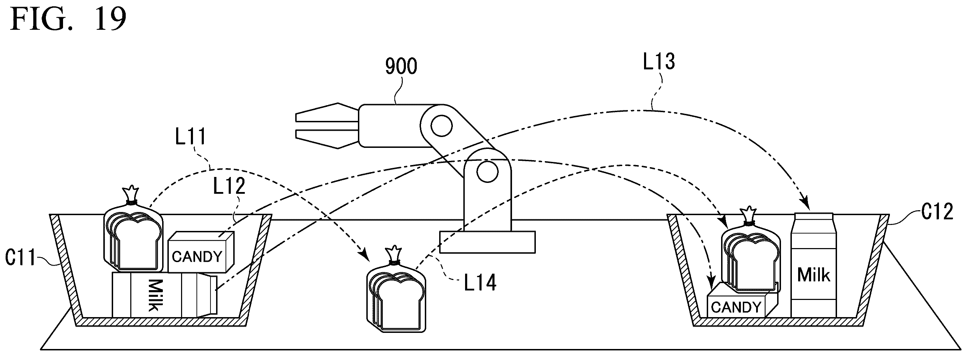

FIG. 19 is a diagram showing an example of processing performed by the control target 900 according to a control by the control device 400. FIG. 19 shows an example of processing that transfers an item inside a basket C11 to a basket C12.

Here, in the learning performed by the constraint condition learning unit 391, it is assumed that constraint conditions are obtained that include (1) a heavy item cannot be placed on a soft item, (2) items must be placed in a stable orientation, and the like.

The line L11 indicates that the bread is moved to the outside of the basket C11. The line L12 indicates that the candy is transferred from the basket C11 to the basket C12. When the control target 900 moves the candy, the control target 900 places the candy sideways because the bottom area of the candy is small, and it is likely to fall over if it is placed upright.

The line L13 indicates that the milk is transferred from the basket C11 to the basket C12. When the control target 900 moves the milk, the control target 900 places the milk upright because placing the milk sideways causes a portion of the milk to be placed on the candy and become unstable.

The line L14 indicates moving the bread into the basket C12. The control target 900 places the soft bread on top of the hard candy.

In this way, as a result of the control device 400 controlling the control target 900 based on the constraint conditions, it is expected that the control target 900 will be capable of performing processing according to a control of the control device 400, even if the types of items, the arrangement of the items, and the positions of the baskets are changed.

Furthermore, if the control target 900 fails to perform the processing, as a result of the constraint condition learning unit 391 learning the constraint conditions based on a simulation result from the simulation processing unit 491, it is expected that the processing by the control target 900 will become successful.

Moreover, in a case where the control system 1 is introduced, as a result of the control device 400 learning the constraint conditions in advance through simulations, it is expected to be possible for the processing to be immediately performed after the control system 1 is introduced.

As described above, the constraint condition learning unit 391 learns the constraint conditions based on a simulation result of the processing subjected to execution in an environment that simulates the real environment. The environment-compliant constraint condition data generation unit 292 generates environment-compliant constraint condition data in which the real environment feature data and the constraint conditions obtained by learning are associated with each other.

In the control device 400, as a result of the constraint condition learning unit 391 learning the constraint conditions, it is expected that execution target processing that has failed will become successful.

Furthermore, in the control device 400, because the constraint condition learning unit 391 learns the constraint conditions based on a simulation result, it is possible for the constraint conditions to be learned before the control system 1 is introduced, and it is expected to be possible for the processing to be immediately performed after the control system 1 is introduced.

### <Fifth example embodiment>

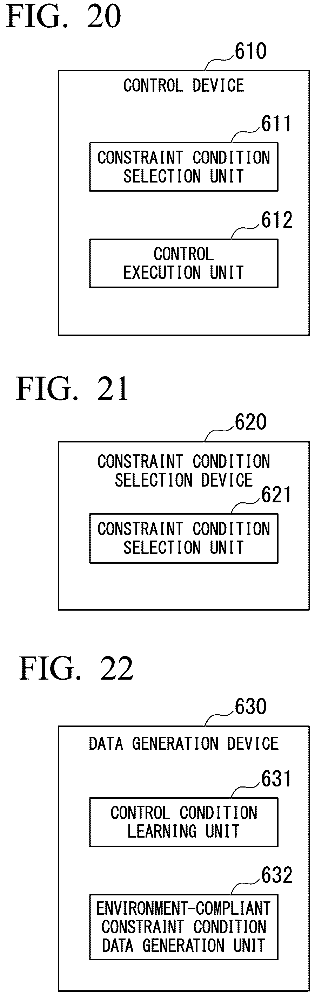

FIG. 20 is a diagram showing an example of a configuration of a control device according to a fifth example embodiment. In the configuration shown in FIG. 20, the control device 610 includes a constraint condition selection unit 611 and a control execution unit 612.

In such a configuration, the constraint condition selection unit 611 selects, among environment-compliant constraint condition data in which environment feature information, being information related to an execution environment of processing, and constraint conditions of execution of the processing in the environment are associated with each other, environment-compliant constraint condition data corresponding to a real environment, which is an execution environment of processing subjected to execution. The control execution unit 612 controls a control target to execute processing subjected to execution based on the constraint conditions indicated by the selected environment-compliant constraint condition data.

The constraint condition selection unit 611 corresponds to an example of a constraint condition selection means. The control execution unit 612 corresponds to an example of a control execution means.

As a result of the control device 610 acquiring the constraint conditions corresponding to the real environment, it is expected that, in addition to differences in the execution environment of the processing, differences in the processing subjected to execution can also be handled. For example, in a case where the control target moves, a constraint condition that causes a predetermined obstacle to be avoided can be applied to various processing that is accompanied by movement of the control target.

The constraint condition selection unit 611 can be realized, for example, using the functions of the constraint condition selection unit 193 and the like shown in FIG. 2. The control execution unit 612 can be realized, for example, using the functions of the control execution unit 194 and the like shown in FIG. 2.

### <Sixth example embodiment>

FIG. 21 is a diagram showing an example of a configuration of a constraint condition selection device according to a sixth example embodiment. In the configuration shown in FIG. 21, the constraint condition selection device 620 includes a constraint condition selection unit 621.

In such a configuration, the constraint condition selection unit 621 selects, among environment-compliant constraint condition data in which environment feature information, being information related to an execution environment of processing, and constraint conditions of execution of the processing in the environment are associated with each other, environment-compliant constraint condition data corresponding to a real environment, which is an execution environment of processing subjected to execution.

The constraint condition selection unit 621 corresponds to an example of a constraint condition selection means.

As a result of using the constraint conditions selected by the constraint condition selection device 620, it is expected that, in addition to differences in the execution environment of the processing, differences in the processing subjected to execution can also be handled. For example, in a case where the control target moves, a constraint condition that causes a predetermined obstacle to be avoided can be applied to various processing that is accompanied by movement of the control target.

The constraint condition selection unit 621 can be realized, for example, using the functions of the constraint condition selection unit 193 and the like shown in FIG. 2.

### <Seventh example embodiment>

FIG. 22 is a diagram showing an example of a configuration of a data generation device according to a seventh example embodiment. In the configuration shown in FIG. 22, the data generation device 630 includes a constraint condition learning unit 631 and an environment-compliant constraint condition data generation unit 632.

In such a configuration, the constraint condition learning unit 631 learns the constraint condition based on processing simulation results. The environment-compliant constraint condition data generation unit 632 generates, by associating information related to an environment of a simulation of the processing, and a constraint condition obtained by learning with each other, environment-compliant constraint condition data in which environment feature information, being information related to an environment, and a constraint condition are associated with each other.

The constraint condition learning unit 631 corresponds to an example of a constraint condition learning means. The environment-compliant constraint condition data generation unit 632 corresponds to an example of an environment-compliant constraint condition data generation means.

As a result of the data generation device 630 learning the constraint conditions, and by using the obtained constraint conditions, it is expected that, in addition to differences in the execution environment of the processing, differences in the processing subjected to execution can also be handled. For example, in a case where the control target moves, a constraint condition that causes a predetermined obstacle to be avoided can be applied to various processing that is accompanied by movement of the control target.

The constraint condition learning unit 631 can be realized, for example, using the functions of the constraint condition learning unit 391 and the like in FIG. 16. The environment-compliant constraint condition data generation unit 632 can be realized, for example, using the functions of the environment-compliant constraint condition data generation unit 292 and the like in FIG. 16.

### <Eighth example embodiment>

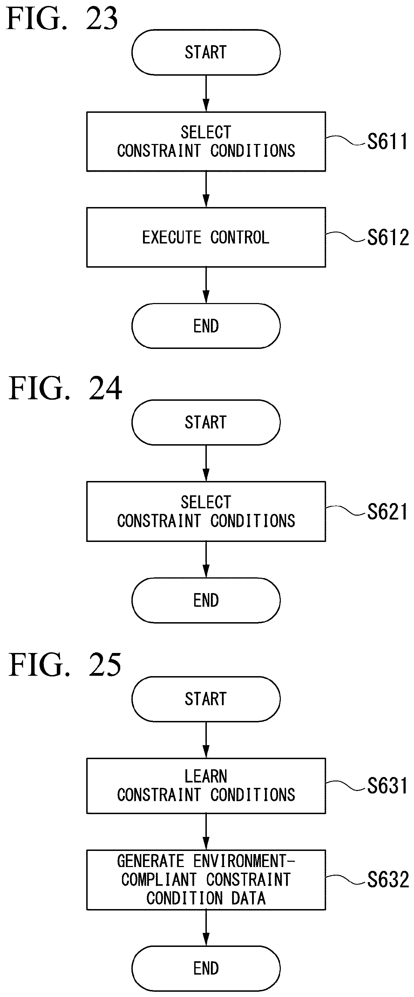

FIG. 23 is a diagram showing an example of the processing procedure of a control method according to an eighth example embodiment. The control method shown in FIG. 23 includes selecting constraint conditions (step S611), and executing a control (step S612).

In selecting constraint conditions (step S611), a computer selects, among environment-compliant constraint condition data in which environment feature information, being information related to an execution environment of processing, and constraint conditions of execution of the processing in the environment are associated with each other, environment-compliant constraint condition data corresponding to a real environment, which is an execution environment of processing subjected to execution.

In executing a control (step S612), a computer controls a control target to execute processing subjected to execution based on the constraint conditions indicated by the selected environment-compliant constraint condition data.

According to the control method shown in FIG. 23, as a result of acquiring the constraint conditions corresponding to the real environment, it is expected that, in addition to differences in the execution environment of the processing, differences in the processing subjected to execution can also be handled. For example, in a case where the control target moves, a constraint condition that causes a predetermined obstacle to be avoided can be applied to various processing that is accompanied by movement of the control target.

### <Ninth example embodiment>

FIG. 24 is a diagram showing an example of the processing procedure of a constraint condition selection method according to a ninth example embodiment. The constraint condition selection method shown in FIG. 24 includes selecting a constraint condition (step S621).

In selecting a constraint condition (step S621), a computer selects, among environment-compliant constraint condition data in which environment feature information, being information related to an execution environment of processing, and constraint conditions of execution of the processing in the environment are associated with each other, environment-compliant constraint condition data corresponding to a real environment, which is an execution environment of processing subjected to execution.

According to the constraint condition selection method shown in FIG. 24, as a result of using the selected constraint conditions, it is expected that, in addition to differences in the execution environment of the processing, differences in the processing subjected to execution can also be handled. For example, in a case where the control target moves, a constraint condition that causes a predetermined obstacle to be avoided can be applied to various processing that is accompanied by movement of the control target.

### <Tenth example embodiment>

FIG. 25 is a diagram showing an example of the processing procedure of a data generation method according to a tenth example embodiment. The data generation method shown in FIG. 25 includes learning constraint conditions (step S631), and generating environment-compliant constraint condition data (step S632).

In learning constraint conditions (step S631), a computer learns constraint conditions based on a simulation result of processing.

In generating environment-compliant constraint condition data (step S632), it generates, by associating information related to an environment of a simulation of the processing and a constraint condition obtained by learning with each other, environment-compliant constraint condition data in which environment feature information, being information related to an environment, and a constraint condition are associated with each other.

According to the data generation method shown in FIG. 25, as a result of learning the constraint conditions, and by using the obtained constraint conditions, it is expected that, in addition to differences in the execution environment of the processing, differences in the processing subjected to execution can also be handled. For example, in a case where the control target moves, a constraint condition that causes a predetermined obstacle to be avoided can be applied to various processing that is accompanied by movement of the control target.

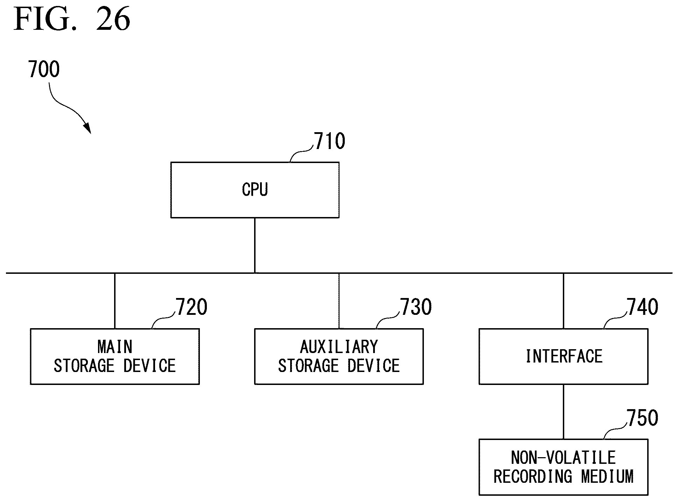

FIG. 26 is a schematic block diagram showing a configuration of a computer according to at least one example embodiment.

In the configuration shown in FIG. 26, a computer 700 includes a CPU 710, a main storage device 720, an auxiliary storage device 730, an interface 740, and a non-volatile recording medium 750.

Any one or more of the control device 100, the control device 200, the control device 300, the control device 400, the control device 610, the constraint condition selection device 620, and the data generation device 630, or a portion thereof, may be implemented by the computer 700. In this case, the operation of each of the processing units described above is stored in the auxiliary storage device 730 in the form of a program. The CPU 710 reads the program from the auxiliary storage device 730, expands the program in the main storage device 720, and executes the processing described above according to the program. Further, the CPU 710 reserves a storage area corresponding to each of the storage units in the main storage device 720 according to the program. The communication of each device with other devices is executed as a result of the interface 740 having a communication function and performing communication according to the control of the CPU 710.

In the case where the control device 100 is implemented by the computer 700, the operation of the processing unit 190 and each of the units thereof is stored in the auxiliary storage device 730 in the form of a program. The CPU 710 reads the program from the auxiliary storage device 730, expands the program in the main storage device 720, and executes the processing described above according to the program.

Furthermore, the CPU 710 reserves a storage area of the storage unit 180 and each unit thereof in the main storage device 720 according to the program. The communication by the communication unit 110 with other devices is executed as a result of the interface 740 including a communication function and operating under the control of the CPU 710. The display of various images by the display unit 120 is executed as a result of the interface 740 including a display device, and displaying various images under the control of the CPU 710. The acceptance of user operations by the operation input unit 130 is executed as a result of the interface 740 including an input device, and receiving user operations under the control of the CPU 710.

In the case where the control device 200 is implemented by the computer 700, the operation of the processing unit 290 and each of the units thereof is stored in the auxiliary storage device 730 in the form of a program. The CPU 710 reads the program from the auxiliary storage device 730, expands the program in the main storage device 720, and executes the processing described above according to the program.

Moreover, the CPU 710 reserves a storage area of the storage unit 180 and each unit thereof in the main storage device 720 according to the program. The communication by the communication unit 110 with other devices is executed as a result of the interface 740 including a communication function and operating under the control of the CPU 710. The display of various images by the display unit 120 is executed as a result of the interface 740 including a display device, and displaying various images under the control of the CPU 710. The acceptance of user operations by the operation input unit 130 is executed as a result of the interface 740 including an input device, and receiving user operations under the control of the CPU 710.

In the case where the control device 300 is implemented by the computer 700, the operation of the processing unit 390 and each of the units thereof is stored in the auxiliary storage device 730 in the form of a program. The CPU 710 reads the program from the auxiliary storage device 730, expands the program in the main storage device 720, and executes the processing described above according to the program.

In addition, the CPU 710 reserves a storage area of the storage unit 180 and each unit thereof in the main storage device 720 according to the program. The communication by the communication unit 110 with other devices is executed as a result of the interface 740 including a communication function and operating under the control of the CPU 710. The display of various images by the display unit 120 is executed as a result of the interface 740 including a display device, and displaying various images under the control of the CPU 710. The acceptance of user operations by the operation input unit 130 is executed as a result of the interface 740 including an input device, and receiving user operations under the control of the CPU 710.

In the case where the control device 400 is implemented by the computer 700, the operation of the processing unit 490 and each of the units thereof is stored in the auxiliary storage device 730 in the form of a program. The CPU 710 reads the program from the auxiliary storage device 730, expands the program in the main storage device 720, and executes the processing described above according to the program.

Also, the CPU 710 reserves a storage area of the storage unit 180 and each unit thereof in the main storage device 720 according to the program. The communication by the communication unit 110 with other devices is executed as a result of the interface 740 including a communication function and operating under the control of the CPU 710. The display of various images by the display unit 120 is executed as a result of the interface 740 including a display device, and displaying various images under the control of the CPU 710. The acceptance of user operations by the operation input unit 130 is executed as a result of the interface 740 including an input device, and receiving user operations under the control of the CPU 710.

In the case where the control device 610 is implemented by the computer 700, the operation of the constraint condition selection unit 611 and the control execution unit 612 is stored in the auxiliary storage device 730 in the form of a program. The CPU 710 reads the program from the auxiliary storage device 730, expands the program in the main storage device 720, and executes the processing described above according to the program.

Furthermore, the CPU 710 reserves a storage area of the main storage device 720 for the control device 610 to perform processing according to the program. The communication between the control device 610 and other devices is executed as a result of the interface 740 including a communication function and operating under the control of the CPU 710. The interactions between the control device 610 and the user is executed as a result of the interface 740 having a display device and an input device, various images being displayed according to control by the CPU 710, and receiving a user input.

In the case where the constraint condition selection device 620 is implemented by the computer 700, the operation of the constraint condition selection unit 621 is stored in the auxiliary storage device 730 in the form of a program. The CPU 710 reads the program from the auxiliary storage device 730, expands the program in the main storage device 720, and executes the processing described above according to the program.

Furthermore, the CPU 710 reserves a storage area in the main storage device 720 for the constraint condition selection device 620 to perform processing according to the program. The communication between the constraint condition selection device 620 and other devices is executed as a result of the interface 740 including a communication function and operating under the control of the CPU 710. The interactions between the constraint condition selection device 620 and the user is executed as a result of the interface 740 having a display device and an input device, various images being displayed according to control by the CPU 710, and receiving a user input.

In the case where the data generation device 630 is implemented by the computer 700, the operation of the constraint condition learning unit 631 and the environment-compliant constraint condition data generation unit 632 is stored in the auxiliary storage device 730 in the form of a program. The CPU 710 reads the program from the auxiliary storage device 730, expands the program in the main storage device 720, and executes the processing described above according to the program.

Moreover, the CPU 710 reserves a storage area in the main storage device 720 for the data generation device 630 to perform processing according to the program. The communication between the data generation device 630 and other devices is executed as a result of the interface 740 including a communication function and operating under the control of the CPU 710. The interactions between the data generation device 630 and the user is executed as a result of the interface 740 having a display device and an input device, various images being displayed according to control by the CPU 710, and receiving a user input.

One or more of the programs described above may be recorded in the non-volatile recording medium 750. In this case, the interface 740 may read out the program from the non-volatile recording medium 750. Then, the CPU 710 directly executes the program that has been read out by the interface 740, or executes the program after temporarily saving it in the main storage device 720 or the auxiliary storage device 730.

A program for executing some or all of the processing performed by the control device 100, the control device 200, the control device 300, the control device 400, the control device 610, the constraint condition selection device 620, and the data generation device 630 may be recorded in a computer-readable recording medium, and the processing of each unit may be performed by a computer system reading and executing the program recorded on the recording medium. The "computer system" referred to here is assumed to include an OS and hardware such as a peripheral device.

Furthermore, the "computer-readable recording medium" refers to a portable medium such as a flexible disk, a magnetic optical disk, a ROM (Read Only Memory), or a CD-ROM (Compact Disc Read Only Memory), or a storage device such as a hard disk built into a computer system. Moreover, the program may be one capable of realizing some of the functions described above. In addition, the functions described above may be realized in combination with a program already recorded in the computer system.

Example embodiments of the present invention have been described in detail above with reference to the drawings. However, specific configurations are in no way limited to the example embodiments, and include designs and the like within a scope not departing from the spirit of the present invention.

The whole or part of the example embodiments above can be described as the supplementary notes below, but the example embodiments are not limited thereto.

### (Supplementary note 1)

A control device comprising:
a constraint condition selection means for selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution; and
a control execution means for controlling a control target to execute the processing subjected to execution based on a constraint condition indicated by the selected environment-compliant constraint condition data.

### (Supplementary note 2)

The control device according to supplementary note 1, further comprising:
a real environment feature information generation means for generating real environment feature information that is environment feature information of the real environment, based on observation data of the real environment obtained by a sensor that observes the real environment, and
a similarity calculation means for calculating a similarity of environment feature information,
wherein the constraint condition selection means selects the environment-compliant constraint condition data corresponding to the real environment based on a similarity between the real environment feature information and the environment feature information included in the environment-compliant constraint condition data.

### (Supplementary note 3)

The control device according to supplementary note 2, wherein the environment feature information is represented by a graph including nodes representing objects in the execution environment of the processing, and edges representing a relationship between the nodes.

### (Supplementary note 4)

The control device according to any one of supplementary notes 1 to 3, further comprising
an environment-compliant constraint condition data generation means for, in a case where there is no environment-compliant constraint condition data that includes environment feature information a similarity of which with the real environment feature information is equal to or greater than a predetermined threshold, generating environment-compliant constraint condition data in which real environment feature information and a constraint condition of the real environment are associated with each other.

### (Supplementary note 5)

The control device according to supplementary note 4, further comprising
a support requesting means for requesting a user operation in the case where there is no environment-compliant constraint condition data that includes the environment feature information in which the similarity of which with the real environment feature information is equal to or greater than the predetermined threshold,
wherein the environment-compliant constraint condition data generation means generates, based on the user operation, the environment-compliant constraint condition data in which the real environment feature information and the constraint condition of the real environment are associated with each other.

### (Supplementary note 6)

The control device according to supplementary note 5, wherein the environment-compliant constraint condition data generation means generates the environment-compliant constraint condition data in which the real environment feature information and the constraint condition input by the user operation are associated with each other.

### (Supplementary note 7)

The control device according to supplementary note 5, further comprising
a constraint condition learning means for learning a constraint condition based on a user operation that operates a control target,
wherein the environment-compliant constraint condition data generation means generates environment-compliant constraint condition data in which the real environment feature data and the constraint condition obtained by learning are associated with each other.

### (Supplementary note 8)

The control device according to supplementary note 4, further comprising
a constraint condition learning means for learning a constraint condition based on a simulation result of the processing subjected to execution in an environment simulating the real environment,
wherein the environment-compliant constraint condition data generation means generates environment-compliant constraint condition data in which the real environment feature data and the constraint condition obtained by learning are associated with each other.

### (Supplementary note 9)

A constraint condition selection device comprising:
a constraint condition selection means for selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution.

### (Supplementary note 10)

A data generation device comprising:
a constraint condition learning means for learning a constraint condition based on a simulation result of processing; and
an environment-compliant constraint condition data generation means for generating, by associating information related to an environment of a simulation of the processing and the constraint condition obtained by learning with each other, environment-compliant constraint condition data in which environment feature information that is information related to an environment, and a constraint condition are associated with each other.

### (Supplementary note 11)

A control method executed by a computer, comprising:
selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution; and
controlling a control target to execute the processing subjected to execution based on a constraint condition indicated by the selected environment-compliant constraint condition data.

### (Supplementary note 12)

A constraint condition selection method executed by a computer, comprising:
selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution.

### (Supplementary note 13)

A data generation method executed by a computer, comprising:
learning a constraint condition based on a simulation result of processing; and
generating, by associating information related to an environment of a simulation of the processing and the constraint condition obtained by learning with each other, environment-compliant constraint condition data in which environment feature information that is information related to an environment, and a constraint condition are associated with each other.

### (Supplementary note 14)

A recording medium that stores a program that causes a computer to execute:
selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution; and
controlling a control target to execute the processing subjected to execution based on a constraint condition indicated by the selected environment-compliant constraint condition data.

### (Supplementary note 15)

A recording medium that stores a program that causes a computer to execute:
selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution.

### (Supplementary note 16)

A recording medium that stores a program that causes a computer to execute:
learning a constraint condition based on a simulation result of processing; and
generating, by associating information related to an environment of a simulation of the processing and the constraint condition obtained by learning with each other, environment-compliant constraint condition data in which environment feature information that is information related to an environment, and a constraint condition are associated with each other.

### INDUSTRIAL APPLICABILITY

The present invention may be applied to a control device, a constraint condition selection device, a data generation device, a control method, a constraint condition selection method, a data generation method, and a storage medium.

### Reference Signs List

1 Control system
100, 200, 300, 400, 610 Control device
110 Communication unit
120 Display unit
130 Operation input unit
180 Storage unit
181 Environment-compliant constraint condition data storage unit
190, 290, 390, 490 Processing unit
191 Real environment feature information generation unit
192 Similarity calculation unit
193, 611, 621 Constraint condition selection unit
194, 612 Control execution unit
291 Support requesting unit
292, 632 Environment-compliant constraint condition data generation unit
391, 631 Constraint condition learning unit
491 Simulation processing unit
620 Constraint condition selection device
630 Data generation device
900 Control target

## Claims

1. A control device comprising:
a constraint condition selection means for selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution; and
a control execution means for controlling a control target to execute the processing subjected to execution based on a constraint condition indicated by the selected environment-compliant constraint condition data.

2. The control device according to claim 1, further comprising:
a real environment feature information generation means for generating real environment feature information that is environment feature information of the real environment, based on observation data of the real environment obtained by a sensor that observes the real environment, and
a similarity calculation means for calculating a similarity of environment feature information,
wherein the constraint condition selection means selects the environment-compliant constraint condition data corresponding to the real environment based on a similarity between the real environment feature information and the environment feature information included in the environment-compliant constraint condition data.

3. The control device according to claim 2, wherein the environment feature information is represented by a graph including nodes representing objects in the execution environment of the processing, and edges representing a relationship between the nodes.

4. The control device according to any one of claims 1 to 3, further comprising
an environment-compliant constraint condition data generation means for, in a case where there is no environment-compliant constraint condition data that includes environment feature information a similarity of which with the real environment feature information is equal to or greater than a predetermined threshold, generating environment-compliant constraint condition data in which real environment feature information and a constraint condition of the real environment are associated with each other.

5. The control device according to claim 4, further comprising
a support requesting means for requesting a user operation in the case where there is no environment-compliant constraint condition data that includes the environment feature information in which the similarity of which with the real environment feature information is equal to or greater than the predetermined threshold,
wherein the environment-compliant constraint condition data generation means generates, based on the user operation, the environment-compliant constraint condition data in which the real environment feature information and the constraint condition of the real environment are associated with each other.

6. The control device according to claim 5, wherein the environment-compliant constraint condition data generation means generates the environment-compliant constraint condition data in which the real environment feature information and the constraint condition input by the user operation are associated with each other.

7. The control device according to claim 5, further comprising
a constraint condition learning means for learning a constraint condition based on a user operation that operates a control target,
wherein the environment-compliant constraint condition data generation means generates environment-compliant constraint condition data in which the real environment feature data and the constraint condition obtained by learning are associated with each other.

8. The control device according to claim 4, further comprising
a constraint condition learning means for learning a constraint condition based on a simulation result of the processing subjected to execution in an environment simulating the real environment,
wherein the environment-compliant constraint condition data generation means generates environment-compliant constraint condition data in which the real environment feature data and the constraint condition obtained by learning are associated with each other.

9. A constraint condition selection device comprising:
a constraint condition selection means for selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution.

10. A data generation device comprising:
a constraint condition learning means for learning a constraint condition based on a simulation result of processing; and
an environment-compliant constraint condition data generation means for generating, by associating information related to an environment of a simulation of the processing and the constraint condition obtained by learning with each other, environment-compliant constraint condition data in which environment feature information that is information related to an environment, and a constraint condition are associated with each other.

11. A control method executed by a computer, comprising:
selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution; and
controlling a control target to execute the processing subjected to execution based on a constraint condition indicated by the selected environment-compliant constraint condition data.

12. A constraint condition selection method executed by a computer, comprising:
selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution.

13. A data generation method executed by a computer, comprising:
learning a constraint condition based on a simulation result of processing; and
generating, by associating information related to an environment of a simulation of the processing and the constraint condition obtained by learning with each other, environment-compliant constraint condition data in which environment feature information that is information related to an environment, and a constraint condition are associated with each other.

14. A recording medium that stores a program that causes a computer to execute:
selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution; and
controlling a control target to execute the processing subjected to execution based on a constraint condition indicated by the selected environment-compliant constraint condition data.

15. A recording medium that stores a program that causes a computer to execute:
selecting, among environment-compliant constraint condition data in which environment feature information that is information related to an execution environment of processing, and a constraint condition of execution of processing in the environment are associated with each other, environment-compliant constraint condition data corresponding to a real environment that is an execution environment of processing subjected to execution.

16. A recording medium that stores a program that causes a computer to execute:
learning a constraint condition based on a simulation result of processing; and
generating, by associating information related to an environment of a simulation of the processing and the constraint condition obtained by learning with each other, environment-compliant constraint condition data in which environment feature information that is information related to an environment, and a constraint condition are associated with each other.
